# EUROPEAN PATENT APPLICATION

(11) **EP 4 852 477 A1**
(43) Date of publication of application: **09.12.2026**
(21) Application number: 24920990.9
(22) Date of filing: 02.02.2024
(51) Int. Cl.: H04W 8/14

(54) **RELAY COMMUNICATION METHOD AND WIRELESS COMMUNICATION DEVICE**

(71) Applicant: Shenzhen TCL New Technology Co., Ltd., Shenzhen, Guangdong 518052 (CN)
(72) Inventor: ZHOU, Pei, Shenzhen, Guangdong 518052 (CN); TANG, Xiaoyong, Shenzhen, Guangdong 518052 (CN)
(74) Representative: Murgitroyd & Company
(86) International application number: PCT/CN2024/075391
(87) International publication number: WO 2025/160928

(57) **Abstract**

Embodiments of the present application provide a relay communication method and a wireless communication device. The relay communication method is performed by a relay communication device, and comprises: transmitting, to an access point (AP) and/or a non-AP station (STA), a capability parameter of the relay communication device, wherein the capability parameter comprises one or more of the following: buffer information of the relay communication device available for relaying; information on whether a power state of the relay communication device is available for a relay service; multi-link relay operation configuration information, for indicating whether the relay communication device supports a multi-link relay operation and/or for indicating a link that can support relay reception or transmission; buffer information of the relay communication device acting as an AP or a non-AP STA; information indicating a maximum number of served devices supported by the relay communication device; and information indicating a number of served devices that the relay communication device can currently support.

## Description

### TECHNICAL FIELD

Embodiments of the present application relate to the field of mobile communication technologies, and specifically, to a relay communication method and a wireless communication device.

### BACKGROUND

In the existing 802.11 series of standards, the scenario typically considered is one where an Access Point (AP) communicates directly with one or more associated non-AP stations (STAs). However, when a STA is far from the AP, significant path loss or severe interference can lead to poor communication link quality (e.g., Signal-to-Noise Ratio (SNR) or Signal-to-Interference-plus-Noise Ratio (SINR)), thereby affecting the communication rate. Therefore, in 802.11bn, using a Relay to improve the throughput for distant users has become a key research focus. How to design a high-reliability, low-latency Relay mechanism is a problem that urgently needs to be solved. The existing art has not substantially addressed the problem of how to perform fast/low-latency relay link switch after a relay failure is discovered, nor has it discussed or designed how to enhance relay reliability. Therefore, there is a need to propose a relay communication method and a wireless communication device to improve the existing art.

### SUMMARY

Embodiments of the present application provide a relay communication method and a wireless communication device to improve upon problems of the existing art and other problems.

An embodiment of the present application provides a relay communication method, performed at a relay communication device, wherein the relay communication method comprises: transmitting, to an access point (AP) and/or a non-AP station (STA), a capability parameter of the relay communication device, wherein the capability parameter comprises one or more of the following: buffer information of the relay communication device available for relaying; information on whether a power state of the relay communication device is available for a relay service; multi-link relay operation configuration information, for indicating whether the relay communication device supports a multi-link relay operation and/or for indicating a link that supports relay reception or transmission; buffer information of the relay communication device acting as an AP or a non-AP STA; information indicating a maximum number of served devices supported by the relay communication device; or information indicating a number of served devices that the relay communication device can currently support.

With the above technical solution, the relay communication device transmits the capability parameter of the relay communication device to the AP and/or the non-AP STA. In this way, an Access Point Multi-Link Device (AP MLD) and a non-AP Multi-Link Device (non-AP MLD) in the vicinity of the relay communication device can learn the capability information of the relay communication device, and accordingly perform selection of the relay communication device. Using a relay can extend the signal coverage/transmission distance of Wi-Fi, increase the rate for cell-edge users, reduce latency, and improve user experience.

An embodiment of the present application provides a relay communication method, comprising: performing an acknowledgement during a multi-relay transmission, wherein the acknowledgement during the multi-relay transmission comprises an acknowledgement when multiple links of a single relay are used to provide a relay transmission service to the same non-AP STA or AP, or an acknowledgement when different links of multiple relays are used to provide a relay transmission service to the same non-AP STA or AP.

With the above technical solution, an acknowledgement is performed when multiple links of a single relay are used to provide a relay transmission service to the same non-AP station (STA), or when different links of multiple relays are used to provide a relay transmission service to the same non-AP STA. In this way, an Access Point Multi-Link Device (AP MLD) and a non-AP Multi-Link Device (non-AP MLD) in the vicinity of the relay communication device can learn the capability information of the relay communication device, and accordingly perform selection of the relay communication device. Using a relay can extend the signal coverage/transmission distance of Wi-Fi, increase the rate for cell-edge users, reduce latency, and improve user experience.

An embodiment of the present application provides a relay communication method, performed at a first node, wherein the relay communication method comprises: receiving, from a relay communication device, a capability parameter of the relay communication device, wherein the capability parameter comprises one or more of the following: buffer information of the relay communication device available for relaying; information on whether a power state of the relay communication device is available for a relay service; multi-link relay operation configuration information, for indicating whether the relay communication device supports a multi-link relay operation and/or for indicating a link that supports relay reception or transmission; buffer information of the relay communication device acting as an AP or a non-AP STA; information indicating a maximum number of served devices supported by the relay communication device; and information indicating a number of served devices that the relay communication device can currently support.

With the above technical solution, the first node receives the capability parameter of the relay communication device transmitted by the relay communication device. In this way, an Access Point Multi-Link Device (AP MLD) and a non-AP Multi-Link Device (non-AP MLD) in the vicinity of the relay communication device can learn the capability information of the relay communication device, and accordingly perform selection of the relay communication device. Using a relay can extend the signal coverage/transmission distance of Wi-Fi, increase the rate for cell-edge users, reduce latency, and improve user experience.

An embodiment of the present application provides a wireless communication device, comprising: a processor and a memory, wherein the memory is configured to store a computer program, and the processor is configured to call and run the computer program stored in the memory to perform the relay communication method described above.

An embodiment of the present application provides a relay communication device, comprising a processor and a memory. The memory is configured to store a computer program, and the processor is configured to call and run the computer program stored in the memory to perform the relay communication method described above.

An embodiment of the present application provides a first node, comprising a processor and a memory. The memory is configured to store a computer program, and the processor is configured to call and run the computer program stored in the memory to perform the relay communication method described above.

An embodiment of the present application provides a chip for implementing the relay communication method described above.

Specifically, the chip comprises: a processor, configured to call and run a computer program from a memory, to cause a device in which the chip is installed to perform the relay communication method described above.

An embodiment of the present application provides a computer-readable storage medium for storing a computer program, wherein the computer program causes a computer to perform the relay communication method described above.

An embodiment of the present application provides a computer program product, comprising computer program instructions, wherein the computer program instructions cause a computer to perform the relay communication method described above.

An embodiment of the present application provides a computer program, which, when run on a computer, causes the computer to perform the relay communication method described above.

With the above technical solution, the relay communication device transmits the capability parameter of the relay communication device to the AP and/or the non-AP STA. In this way, an Access Point Multi-Link Device (AP MLD) and a non-AP Multi-Link Device (non-AP MLD) in the vicinity of the relay communication device can learn the capability information of the relay communication device, and accordingly perform selection of the relay communication device.

### BRIEF DESCRIPTION OF THE DRAWINGS

The accompanying drawings are incorporated herein to provide a further understanding of the present application and constitute a part of the present application. The illustrative embodiments of the present application and their descriptions are used to explain the present application and do not constitute an undue limitation thereon. In the drawings:
FIG. 1A is a schematic flowchart of a relay communication method provided by an embodiment of the present application;
FIG. 1B is a schematic flowchart of a relay communication method provided by an embodiment of the present application;
FIG. 1C is a schematic diagram of an Ultra High Reliability (UHR) relay capability element provided by an embodiment of the present application;
FIG. 2A is a schematic flowchart of a relay communication method provided by an embodiment of the present application;
FIG. 2B is a schematic flowchart of a relay communication method provided by an embodiment of the present application;
FIG. 2C is a schematic flowchart of a relay link failure discovery and relay status notification method provided by an embodiment of the present application;
FIG. 2D is a schematic flowchart of a relay link failure discovery and relay status notification method provided by an embodiment of the present application;
FIG. 2E is a schematic diagram of a relay status notification frame provided by an embodiment of the present application;
FIG. 3A is a schematic diagram of a low-latency relay mechanism provided by an embodiment of the present application;
FIG. 3B is a schematic diagram of a low-latency relay mechanism provided by an embodiment of the present application;
FIG. 3C is a schematic diagram of a low-latency relay mechanism provided by an embodiment of the present application;
FIG. 4A is a schematic diagram of a low-latency relay mechanism provided by an embodiment of the present application;
FIG. 4B is a schematic diagram of a low-latency relay mechanism provided by an embodiment of the present application;
FIG. 5 is a schematic diagram of a low-latency relay mechanism provided by an embodiment of the present application;
FIG. 6A is a schematic diagram of a low-latency relay mechanism provided by an embodiment of the present application;
FIG. 6B is a schematic diagram of a low-latency relay mechanism provided by an embodiment of the present application;
FIG. 6C is a schematic diagram of a low-latency relay mechanism provided by an embodiment of the present application;
FIG. 7A is a schematic diagram of a low-latency relay mechanism provided by an embodiment of the present application;
FIG. 7B is a schematic diagram of a low-latency relay mechanism provided by an embodiment of the present application;
FIG. 8 is a schematic diagram of a low-latency relay mechanism provided by an embodiment of the present application;
FIG. 9A is a schematic flowchart of a relay communication method provided by an embodiment of the present application;
FIG. 9B is a schematic flowchart of a relay communication method provided by an embodiment of the present application;
FIG. 9C is a schematic flowchart of a relay communication method provided by an embodiment of the present application;
FIG. 10 is a schematic structural diagram of a wireless communication device provided by an embodiment of the present application;
FIG. 11 is a schematic structural diagram of a chip of an embodiment of the present application; and
FIG. 12 is a schematic block diagram of a wireless communication system provided by an embodiment of the present application.

### DETAILED DESCRIPTION OF THE EMBODIMENTS

The technical solutions in the embodiments of the present application are described below with reference to the accompanying drawings in the embodiments of the present application. Apparently, the described embodiments are merely some rather than all of the embodiments of the present application. Based on the embodiments in the present application, all other embodiments obtained by a person of ordinary skill in the art without making creative efforts fall within the protection scope of the present application.

It should be understood that the term "and/or" herein is merely a way of describing an association relationship between associated objects, indicating that three relationships can exist. For example, "A and/or B" may indicate three cases: A exists alone, A and B exist together, or B exists alone. In addition, the character "/" herein generally indicates an "or" relationship between the associated objects before and after it.

In some embodiments of the present application, an AP may represent an AP STA or an AP MLD, which means that the term AP as used herein may be used interchangeably with AP STA or AP MLD. A STA may represent an AP STA, a non-AP STA, an AP MLD, or a non-AP MLD, which means that the term STA as used herein may be used interchangeably with AP STA, AP MLD, non-AP STA, or non-AP MLD. A non-AP STA may represent a non-AP MLD, which means that the term non-AP STA as used herein may be used interchangeably with non-AP MLD.

In some embodiments of the present application, an AP can be an AP STA that does not support multi-link, or an AP MLD that supports multi-link; a Relay can be a Relay STA that does not support multi-link, or a Relay MLD that supports multi-link; a STA can be a non-AP STA that does not support multi-link, or a non-AP MLD that supports multi-link. Some embodiments of the present application may use the related names interchangeably.

**Table 1: Abbreviations and Definitions**

| Abbreviation | Full Name |
|---|---|
| Ack | Acknowledgment |
| A-MPDU | Aggregate Medium Access Control (MAC) Protocol Data Unit |
| AP | Access Point |
| BA | Block Acknowledgment |
| BFRP | Beamforming Report Poll |
| BSR | Buffer Status Report |
| BSS | Basic Service Set |
| CCA | Clear Channel Assessment |
| CCMP | Counter Mode (CTR) with Cipher Block Chaining Message Authentication Code (CBC-MAC) Protocol |
| CRC | Cyclic Redundancy Code |
| CSI | Channel State Information |
| CTS | Clear-to-Send |
| DA | Destination Address |
| DIFS | Distributed Coordination Function Interframe Space |
| DL | Downlink |
| EHT | Extremely High Throughput |
| FCS | Frame Check Sequence |
| GCMP | Galois/Counter Mode Protocol |
| HE | High Efficiency |
| HT | High Throughput |
| LLC | Logical Link Control |
| LPD/EPD | LLC Protocol Discrimination / Ethertype Protocol Discrimination |
| MAC | Medium Access Control |
| MLD | Multi-Link Device |
| MLO | Multi-Link Operation |
| MPDU | MAC Protocol Data Unit |
| MSDU | MAC Service Data Unit |
| MU-RTS | Multi-User Request-to-Send |
| MU-RTS TXS TF | Multi-User Request-to-Send TXOP Sharing Trigger Frame |
| NDP | Null Data PPDU |
| NFRP | NDP Feedback Report Poll |
| NSTR | Non-simultaneous Transmit and Receive |
| PAE | Port Access Entity |
| PHY | Physical Layer |
| PIFS | Priority Interframe Space |
| PN | Packet Number |
| QoS | Quality of Service |
| RA | Receiver Address |
| RSSI | Receive Signal Strength Indicator |
| RSNA | Robust Security Network Association |
| RTS | Request-to-Send |
| R-TWT or rTWT | Restricted Target Wake Time |
| RU | Resource Unit |
| RX | Receive |
| SA | Source Address |
| SAP | Service Access Point |
| SIFS | Short Interframe Space |
| SINR | Signal to Interference and Noise Ratio |
| SN | Sequence Number |
| SNR | Signal to Noise Ratio |
| STA | Station |
| STR | Simultaneous Transmit and Receive |
| TA | Transmitter Address |
| TID | Traffic Identifier |
| TX | Transmit |
| TXOP | Transmission Opportunity |
| UHR | Ultra-High Reliability |
| UL | Uplink |
| WM | Wireless Medium |

To facilitate understanding of the technical solutions in the embodiments of the present application, related technical solutions are described below.

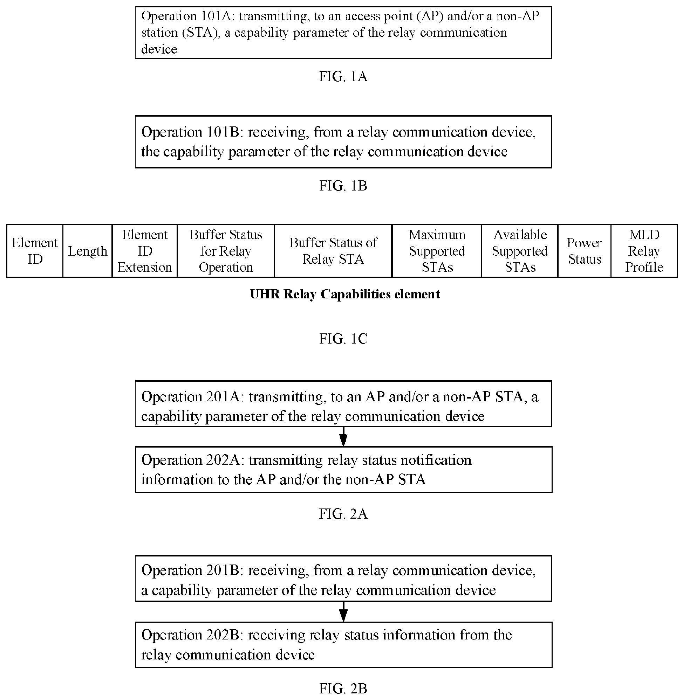

FIG. 1A is a schematic flowchart of a relay communication method provided by an embodiment of the present application. As shown in FIG. 1A, the relay communication method is performed by a relay communication device and includes at least one of the following operations: Operation 101A: transmitting, to an access point (AP) and/or a non-AP station (STA), a capability parameter of the relay communication device. The capability parameter includes one or more of the following: buffer information of the relay communication device available for relaying; information on whether a power state of the relay communication device is available for a relay service; multi-link relay operation configuration information, for indicating whether the relay communication device supports a multi-link relay operation and/or for indicating a link that can support relay reception or transmission; buffer information of the relay communication device acting as an AP or a non-AP STA; information indicating a maximum number of served devices supported by the relay communication device; or information indicating a number of served devices that the relay communication device is capable of further supporting.

With the above technical solution, the relay communication device transmits the capability parameter of the relay communication device to the AP and/or the non-AP STA. In this way, an Access Point Multi-Link Device (AP MLD) and a non-AP Multi-Link Device (non-AP MLD) near the relay communication device can learn the capability information of the relay communication device, and accordingly perform selection of the relay communication device. Thus, using a relay can extend the signal coverage/transmission distance of Wi-Fi, increase the rate for cell-edge users, reduce latency, and improve user experience.

FIG. 1B is a schematic flowchart of a relay communication method provided by an embodiment of the present application. As shown in FIG. 1B, a relay communication method, performed by a first node, includes at least one of the following operations: Operation 101B: receiving, from a relay communication device, the capability parameter of the relay communication device. The capability parameter includes one or more of the following: buffer information of the relay communication device available for relaying; information on whether a power state of the relay communication device is available for a relay service; multi-link relay operation configuration information, for indicating whether the relay communication device supports a multi-link relay operation and/or for indicating a link that can support relay reception or transmission; buffer information of the relay communication device acting as an AP or a non-AP STA; information indicating a maximum number of served devices supported by the relay communication device; and information indicating a number of served devices that the relay communication device is capable of further supporting. The first node can be an AP and/or a non-AP STA.

According to the above technical solution, the first node receives the capability parameter transmitted by the relay communication device. In this way, an AP MLD and a non-AP MLD near the relay communication device can learn the capability information of the relay communication device, and accordingly perform selection of the relay communication device. Thus, using a relay can extend the signal coverage/transmission distance of Wi-Fi, increase the rate for cell-edge users, reduce latency, and improve user experience.

In some embodiments of the present application, the relay communication device transmits the capability parameter to the AP and/or the non-AP STA by transmitting a first frame to the AP and/or the non-AP STA. The first frame carries an Ultra High Reliability (UHR) relay capability element, and the UHR relay capability element includes one or more of the following fields: a buffer state field for relay operation, a power state field, a Multi-Link Device (MLD) relay profile field, a buffer state field of a relay STA, a maximum supported STA field, and an available supported STA field. The buffer state field for relay operation is for indicating the buffer information of the relay communication device available for relaying, the power state field is for indicating whether the power state of the relay communication device is available for the relay service, the MLD relay profile field is for indicating the multi-link relay operation configuration information, the buffer state field of the relay STA is for indicating the buffer information of the relay communication device acting as the AP or the non-AP STA, the maximum supported STA field is for indicating the maximum number of served devices supported by the relay communication device, and the available supported STA field is for indicating the number of served devices that the relay communication device is capable of further supporting.

Some embodiments of the present application regarding the capability parameter of the relay communication device will be described in detail.

### Embodiment: capability parameter/element design of a relay communication device

The main function of a relay communication device is to receive a frame (e.g., a data frame) from a previous node, buffer the frame, and transmit the frame to a next node in a next transmission opportunity (non-TXOP). Therefore, the capability parameter of the relay communication device should at least include a buffer status indication, an indication of the maximum number of served devices supported by the relay communication device, or a power indication of the relay communication device. In addition, the relay communication device itself may also be an AP/non-AP STA. Therefore, the buffer status indication of the relay communication device may need to indicate both the buffer status as a relay communication device and its own buffer status when acting as an AP/non-AP STA.

The design of the UHR relay capability element is shown in FIG. 1C, which mainly includes one or more of the following fields:

Buffer Status for Relay Operation field: Indicates the buffer information of the relay communication device available for relaying, specifically including a buffer value, a Scaling Factor, and a type (and/or priority) of buffered traffic. When the buffer value is set to 0 (that is, all bits used to indicate the buffer value are set to 0), it indicates that the buffer of the relay communication device is full and cannot receive and buffer new relay data.

Buffer Status of Relay STA field: Indicates the relay's own buffer information when acting as an AP/non-AP STA, specifically including information such as a buffer value, a Scaling Factor, and a type (e.g., priority) of buffered traffic. This field is optional because it can be replaced by a QoS Control field or a BSR Control field in a relevant frame structure.

Maximum Supported STAs field: Indicates the maximum number of nodes (e.g., AP/non-AP STAs) to which the relay communication device can provide relay services as a relay.

Available Supported STAs field: Indicates how many more nodes (AP/non-AP STAs) the relay communication device can further provide relay services to as a relay. When the number of nodes served by the relay reaches the value indicated by the Maximum Supported STAs field, the Available Supported STAs field is set to 0, indicating that the current Relay cannot provide Relay services to new nodes.

Power Status field: Includes at least two status indications. One state (for example, High Power) indicates that the current Relay has sufficient power and can continue to provide relay services; another state (for example, Low Power) indicates that the current Relay has insufficient power and cannot continue to provide relay services.

MLD Relay Profile field: The MLD relay profile field is for indicating the multi-link relay operation configuration information. It indicates whether the relay communication device supports multi-link relay operations, and can also specifically include the Link IDs of the relay communication device which support relay operations. For example, it may indicate which links support reception in relay operations, and which links support transmission in relay operations. For details, refer to the definitions of the Available Link ID 1~m field and/or the Peer STA ID of Available Link ID 1~m field below.

In some embodiments of the present application, the first frame is a probe request frame, a probe response frame, a multi-link (ML) probe request frame, an ML probe response frame, an association request frame, or an association response frame. In other words, the UHR Relay Capabilities element can be carried in frames such as a probe request frame, a probe response frame, an ML probe request frame, an ML probe response frame, an association request frame, or an association response frame transmitted by the relay communication device to inform the AP and/or non-AP STA of the relay-related capability information of the relay communication device.

In some embodiments of the present application, the above design uses the UHR Relay Capabilities element to carry the capability parameter of the relay communication device as an example. Alternatively, reserved bits or redefined bits in a frame can be used to indicate the above-mentioned fields. The present application does not impose any limitation on this.

The effect achieved by this embodiment is that the relay communication device transmits its capability parameter/element to nearby AP MLDs and non-AP MLDs, allowing the nearby AP MLDs and non-AP MLDs to learn the capability and status information of the relay communication device. The AP MLDs and non-AP MLDs can then prioritize selecting a relay communication device with more remaining buffer, more remaining power, and the capacity to support more devices, thereby ensuring more stable and faster relay transmission.

FIG. 2A is a schematic flowchart of a relay communication method provided by an embodiment of the present application. As shown in FIG. 2A, the relay communication method is performed by a relay communication device and includes at least one of the following operations: Operation 201A: transmitting, to an AP and/or a non-AP STA, a capability parameter of the relay communication device. Operation 202A: transmitting relay status notification information to the AP and/or the non-AP STA, and the relay status notification information is for indicating a current state of the relay communication device.

According to the above technical solution, the relay communication device transmits relay status notification information to the AP and/or the non-AP STA. In this way, in response to the relay status notification information, operations such as promptly stopping the relay operation, initiating a relay switch, or switching a relay link can be performed. In the above embodiment, the scheme for the relay link failure discovery and relay status notification method is implemented in conjunction with the scheme for the capability parameter/element design of the relay communication device.

FIG. 2B is a schematic flowchart of a relay communication method provided by an embodiment of the present application. As shown in FIG. 2B, a relay communication method, performed by a first node, includes at least one of the following operations: Operation 201B: receiving, from a relay communication device, a capability parameter of the relay communication device. Operation 202B: receiving relay status information, and the relay status information is for indicating a current state of the relay communication device. The first node can be an AP or a non-AP STA (for example, an AP MLD or a non-AP MLD).

According to the above technical solution, the first node receives the relay status information. In this way, in response to the relay status notification information, operations such as promptly stopping the relay operation, initiating a relay switch, or switching a relay link can be performed. In the above embodiment, the scheme for the relay link failure discovery and relay status notification method is implemented in conjunction with the scheme for the capability parameter/element design of the relay communication device.

In some embodiments of the present application, a relay communication method, performed by a relay communication device, includes the following operation: transmitting relay status notification information to the AP and/or the non-AP STA, where the relay status notification information is for indicating a current state of the relay communication device. In some embodiments of the present application, a relay communication method, performed by a first node, includes the following operation: receiving relay status information, where the relay status information is for indicating a current state of the relay communication device. In the above embodiments, the scheme for the relay link failure discovery and relay status notification method is implemented independently of the scheme for the capability parameter/element design of the relay communication device.

In some embodiments of the present application, the operation of transmitting the relay status information to the AP and/or the non-AP STA includes: transmitting a relay status notification frame to the AP and/or the non-AP STA, where the relay status notification frame is for indicating a relay link failure or the state information of the relay communication device. In some embodiments of the present application, the relay status information is transmitted periodically or quasi-periodically to the AP and/or the non-AP STA. In some embodiments of the present application, when a link failure occurs in a relay transmission between the relay communication device and one of the AP and the non-AP STA, the relay status information is transmitted to other devices participating in the relay transmission.

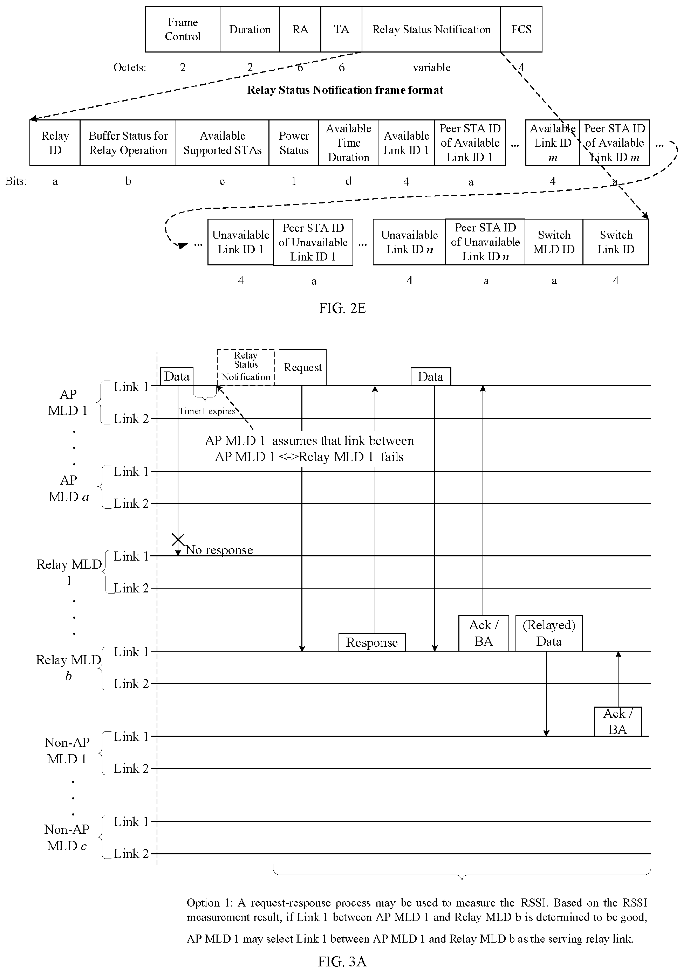

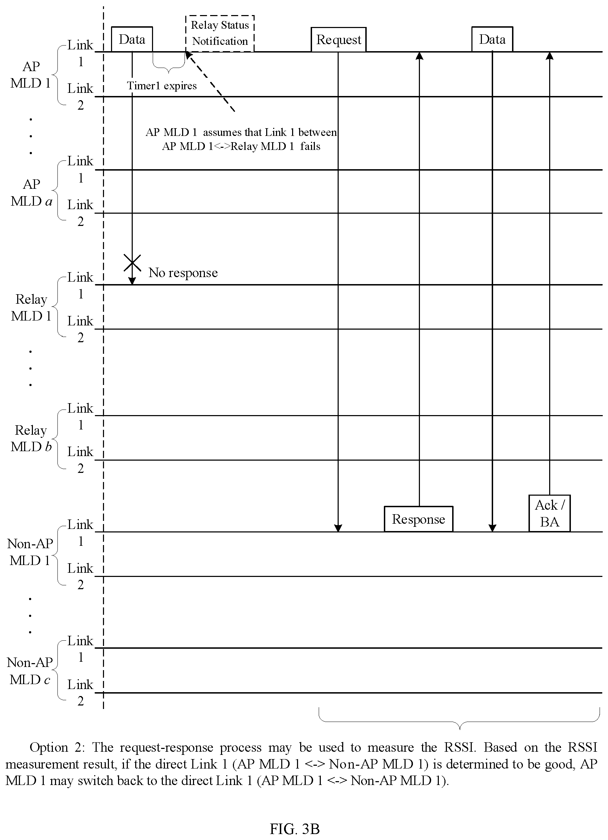

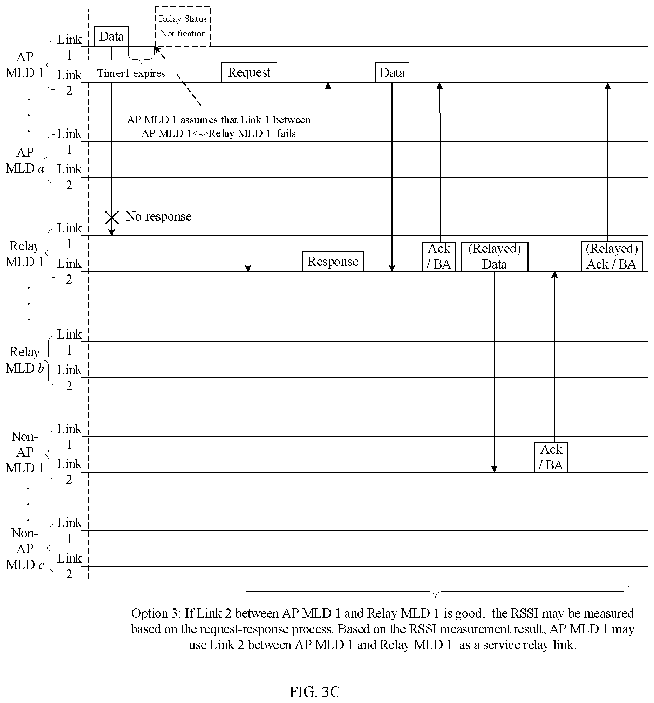

In some embodiments of the present application, other devices participating in the relay transmission are, for example, other AP MLDs or non-AP MLDs. Optionally, other devices participating in the relay transmission are, for example, other AP MLDs (for example, AP MLD a) or non-AP MLDs (for example, Relay MLD b) in FIG. 3A, FIG. 3B, and FIG. 3C. Specifically, if a relay link failure occurs between AP MLD 1 and Relay MLD 1, the relay status information transmitted by AP MLD 1 can be transmitted to other AP MLDs (for example, AP MLD a), to a non-AP MLD, or to Relay MLD b.

In some embodiments of the present application, the operation of receiving the relay status information includes: when a link failure occurs in a relay transmission between the relay communication device and a second node, the first node receiving the relay status information transmitted by the relay communication device; and in response to the relay status information, the first node performing a relay switch or a relay link switch. In some embodiments of the present application, the operation of receiving the relay status information includes: when a link failure occurs in a relay transmission between the relay communication device and a second node, the first node receiving the relay status information transmitted by the second node; and in response to the relay status information, the first node cooperating with the second node to perform a relay switch or a relay link switch.

In some embodiments of the present application, the scheme for the relay link failure discovery and relay status notification method can be implemented in conjunction with the scheme for the capability parameter/element design of the relay communication device, or can be implemented independently of the scheme for the capability parameter/element design of the relay communication device. For example, the capabilities of the relay communication device can be transmitted through other methods/frame fields, which can also be used in combination with the relay link failure discovery and relay status notification method described below.

Hereinafter, some embodiments of the present application regarding relay status information will be described in detail.

### Embodiment: relay link failure discovery and relay status notification method

In some embodiments of the present application, a link failure is determined by a response timeout. That is, a relay link failure is considered to have occurred if a node transmits a frame requiring a response (for example, a request frame or a data frame) to a relay communication device, or a relay communication device transmits such a frame to a next node, and no response is received within a duration of Timer1 (e.g., Timer1 is set to a duration greater than a Short Interframe Space (SIFS)).

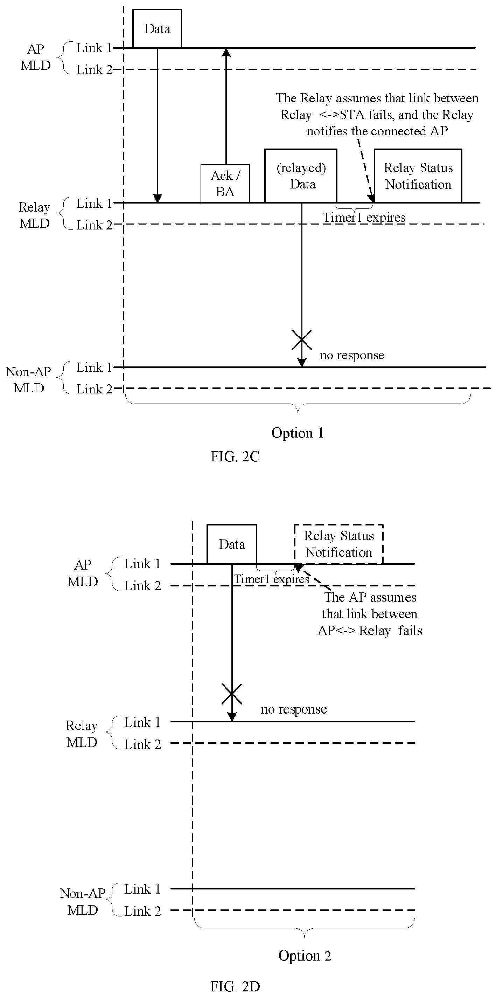

Relay link failures are divided into two major categories, as shown in FIG. 2C and FIG. 2D:
FIG. 2C is a schematic flowchart of a relay link failure discovery and relay status notification method provided by an embodiment of the present application. As shown in FIG. 2C, Option 1: If a relay communication device transmits a frame to a next node and does not receive a corresponding response frame within the time of Timer1, the relay communication device considers that a link failure has occurred between itself and the next node.

In this case, the relay communication device may transmit a Relay Status Notification frame (e.g., to the AP) to inform that a link failure has occurred between the relay communication device and the STA. Then, the AP that receives the Relay Status Notification frame may stop using one or more links of the current relay communication device to relay data to the STA, or reselect another relay communication device to relay data to the STA, or use the current relay communication device to relay data for other STAs, or use other available links of the current relay communication device to relay data to the STA.

FIG. 2D is a schematic flowchart of a method for relay link failure discovery and relay status notification provided in an embodiment of the present application. As shown in FIG. 2D, in Option 2, if a previous node transmits a frame to the relay communication device and does not receive a corresponding response frame within a Timer1 duration, the previous node of the relay communication device considers that a link failure has occurred between itself and the relay communication device.

In this case, the AP may transmit a Relay Status Notification frame (e.g., to the STA) to inform the STA of the link failure between the AP and the relay communication device. Then, the STA that receives the Relay Status Notification frame may stop using the relay to relay data to the AP, or reselect another relay to relay data to the AP, or use the current relay communication device to relay data to other APs, or use other available links of the current relay communication device to relay data to the AP. In this case, the AP may not transmit the Relay Status Notification frame, and instead, the AP may reselect another relay communication device to relay data to the STA.

In some embodiments of the present application, a feature of the above design is that a link failure is determined if a sender transmits a frame requiring a response once and does not receive a response frame within a Timer1 duration.

In some embodiments of the present application, it can also be designed such that a link failure is determined only after multiple retransmissions fail to receive any response frame. Specifically, the sender transmits a frame requiring a response, and if no response frame is received after a Point Coordination Function Interframe Space (PIFS) (or a Distributed Coordination Function Interframe Space (DIFS), or a time duration shorter than Timer1), the frame requiring a response is transmitted again, and a response from the receiver is awaited. If this process is repeated x times (where x is a positive integer) and no response is received from the receiver, a link failure is declared. If the sender receives a response from the receiver before repeating the transmitting of the frame requiring a response x times, a link failure is not declared.

In some embodiments of the present application, in addition to the status notification after the aforementioned relay link failure, the relay communication device can also, at any time, notify a previous node and/or a next node of its state information (e.g., remaining buffer size, remaining power level, how many more devices can further be supported for relaying, which links have failed, and which links are available for relaying) via a Relay Status Notification frame, so that these nodes can use the information for making decisions on other operations. It is worth noting that the relay communication device may also periodically or quasi-periodically transmit the Relay Status Notification frame to allow surrounding nodes to quickly learn the state of the relay communication device, thereby assisting in the selection of a relay or relay link. This period can be determined by the relay communication device itself, or can be set by an AP Multi-Link Device (MLD) during the association process between AP MLDs. Here, quasi-periodic transmitting refers to transmitting at irregular intervals. A quasi-periodic behaviour is a repetitive but unpredictable pattern that cannot be precisely measured. Quasi-periodic means having properties similar to a period but not satisfying the conditions of a strict period. In some embodiments of the present application, quasi-periodic refers to a pattern containing one or more components that do not change significantly in adjacent periods but do change over a longer time period.

In some embodiments of the present application, the relay status notification frame includes one or more of the following fields: a Relay Identifier (ID) field, for indicating state information of the relay communication device corresponding to the Relay ID field; a Buffer Status for Relay Operation field, for indicating buffer information of the relay communication device available for relaying; an Available Supported STAs field, for indicating the number of service devices that the relay communication device is capable of further supporting; a Power Status field, for indicating whether the power state of the relay communication device is available for a relay service; and an Available Time Duration field, for indicating a continuous working time for which the relay communication device corresponding to the Relay ID field can still serve as a relay.

In some embodiments of the present application, the relay status notification information further includes the following fields: an Available Link ID 1~m field, for indicating a state of links available for relay transmission of the relay communication device corresponding to the Relay ID field, where m is a positive integer; and a Peer STA ID of Available Link ID 1~m field, for indicating that the Available Link ID 1~m field corresponds to links between MLDs.

In some embodiments of the present application, the relay status notification information further includes the following fields: an Unavailable Link ID 1~n field, for indicating a state of links unavailable for relay transmission of the relay communication device corresponding to the Relay ID field, where n is a positive integer; and a Peer STA ID of Unavailable Link ID 1~n field, for indicating that the Unavailable Link ID 1~n field corresponds to links between MLDs.

In some embodiments of the present application, the relay status notification information further includes the following fields: a Switch MLD ID field, for indicating an MLD used by the relay communication device to perform a link switch/recovery; and a Switch Link ID field, for indicating a link used by the relay communication device to perform the link switch/recovery.

Hereinafter, some embodiments of the present application regarding the relay status notification frame will be described in detail.

FIG. 2E is a schematic diagram of a relay status notification frame provided in an embodiment of the present application. As shown in FIG. 2E, the Relay Status Notification frame format is designed as described below:

Relay ID field: Used for indicating which relay the state information carried in the Relay Status Notification frame corresponds to. If the frame is transmitted by an AP / non-AP STA, the Relay ID field is present. If the frame is transmitted by a relay, the Relay ID field is not needed, and the Transmitter Address (TA) field of the frame can be used as a substitute, because the frame carries the state information of the current relay. The length of the Relay ID field is *a* bits, where *a* is a positive integer, and may be 11/12/13 bits to correspond to the Association Identifier (AID) assigned to the relay by the AP, or may be 48 bits to correspond to the MAC Address of the relay.

Buffer Status for Relay Operation field: (Consistent with the design in the UHR Relay Capabilities element) Used for indicating the buffer information available for relaying for the relay corresponding to the Relay ID field. When the buffer value is indicated as 0 (i.e., all bits used to indicate the buffer value are set to 0), this indicates that the buffer of the relay is full and cannot receive and buffer new relay data. The length of the Buffer Status for Relay Operation field is b bits, where b is a positive integer.

Available Supported STAs field: (Consistent with the design in the UHR Relay Capabilities element) Indicates how many more nodes (AP / non-AP STAs) the relay corresponding to the Relay ID field can further provide relay services to. When the Available Supported STAs field is set to 0, this indicates that the current relay cannot provide relay services to new nodes. The length of the Available Supported STAs field is c bits, where c is a positive integer.

Power Status field: (Consistent with the design in the UHR Relay Capabilities element) Indicates the power state of the relay corresponding to the Relay ID field, including at least two state indications. For example, the Power Status field being set to 1 indicates that the relay corresponding to the Relay ID field has sufficient power and can continue to provide relay services; the Power Status field being set to 0 indicates that the relay corresponding to the Relay ID field has insufficient power and cannot continue to provide relay services.

Available Time Duration field: Indicates the duration for which the relay corresponding to the Relay ID field can continue to work as a relay. When the Available Time Duration field is set to 0, this indicates that the current relay cannot continue to provide relay services. The Available Time Duration field has a length of d bits, where d is a positive integer, used to indicate the specific time duration.

Available Link ID 1~m field: Indicates links of the relay corresponding to the Relay ID field that are available for relay transmission. It can be used to recommend that the node receiving this Relay Status Notification frame switch to a link indicated by the Available Link ID 1~m field to perform relay operations after learning that the original relay link has failed. Here, m is a positive integer.

Peer STA ID of Available Link ID 1~m field: Indicates the MLD with which the link corresponding to the Available Link ID 1~m field is established, where m is a positive integer. For example, if Relay MLD 1 transmits the Relay Status Notification frame, where Available Link ID 1 = 1 and Peer STA ID of Available Link ID 1 = non-AP MLD 1, then Available Link ID 1 and Peer STA ID of Available Link ID 1 are jointly used to indicate that Link 1 between Relay MLD 1 and non-AP MLD 1 is available. In another example, if Relay MLD 1 transmits the Relay Status Notification frame, where Available Link ID 2 = 2 and Peer STA ID of Available Link ID 2 = AP MLD 1, then Available Link ID 2 and Peer STA ID of Available Link ID 2 are jointly used to indicate that Link 2 between Relay MLD 1 and AP MLD 1 is available. It is worth noting that the Peer STA ID of Available Link ID 1~m field is needed only when the Relay Status Notification frame is broadcast or multicast. When the Relay Status Notification frame is unicast, the Peer STA ID of Available Link ID 1~m field is not needed, because the receiver of the unicast frame is the "Peer STA ID of Available Link ID 1~m".

Unavailable Link ID 1~n field: Indicates which links of the relay corresponding to the Relay ID field are unavailable for relay transmission. This field may be absent. In that case, the link on which this Relay Status Notification frame is transmitted is implied to be the failed link. Here, n is a positive integer.

Peer STA ID of Unavailable Link ID 1~n field: Indicates the MLD with which the links corresponding to the Unavailable Link ID 1~n field are established, where n is a positive integer. For example, Relay MLD 1 sends the Relay Status Notification frame, in which Unavailable Link ID 1 = 1 and Peer STA ID of Unavailable Link ID 1 = non-AP MLD 1. Then, Unavailable Link ID 1 and Peer STA ID of Unavailable Link ID 1 are jointly used to indicate that Link 1 between Relay MLD 1 and non-AP MLD 1 is unavailable. In another example, Relay MLD 1 transmits the Relay Status Notification frame, in which Unavailable Link ID 2 = 2 and Peer STA ID of Unavailable Link ID 2 = AP MLD 1. Then, Unavailable Link ID 2 and Peer STA ID of Unavailable Link ID 2 are jointly used to indicate that Link 2 between Relay MLD 1 and AP MLD 1 is unavailable. It should be noted that the Peer STA ID of Unavailable Link ID 1~n field is required only when the Relay Status Notification frame is transmitted by broadcast or multicast. When the Relay Status Notification frame is transmitted by unicast, the Peer STA ID of Unavailable Link ID 1~n field is not required, because the receiver of the unicast frame is the "Peer STA ID of Unavailable Link ID 1~n".

Switch MLD ID field: This field is used for indicating which Multi-Link Device (MLD) the device transmitting the Relay Status Notification frame will subsequently attempt to use to perform a link switch/recovery (including using other links of the current Relay MLD, using another Relay MLD, or directly recovering a direct link with the non-AP MLD, etc.). If the device transmitting the Relay Status Notification frame uses other links of the current relay to recover the link, the Switch MLD ID field may be absent, because the current relay can be indicated by the Relay ID. If the device transmitting the Relay Status Notification frame uses another relay to recover the link, the Switch MLD ID field is present and indicates the ID of the Relay MLD to be used. If the device transmitting the Relay Status Notification frame uses a direct link with the non-AP MLD to recover the link, the Switch MLD ID field is present and indicates the ID of the destination non-AP MLD. The length of the Switch MLD ID field is also a bits, where a is a positive integer, and may be 11/12/13 bits to correspond to the AID assigned by the AP, or may be 48 bits to correspond to the MAC Address.

Switch Link ID field: This field is used for indicating which link of the device corresponding to the Recovery MLD ID field that the device transmitting the Relay Status Notification frame will subsequently attempt to use to perform a link switch/recovery. If the device transmitting the Relay Status Notification frame uses the current relay to recover the link and the Switch MLD ID field is absent, then the Switch Link ID field indicates a link of the relay corresponding to the Relay ID field.

In some embodiments of the present application, the format of the relay status notification information is an action frame format that includes a status code. The action field format of the relay status notification information includes one or more orders and information corresponding to the one or more orders, and the information includes one or more of the following: a category, for indicating a category of a current frame; a public action, for indicating that the current frame is the relay status notification frame; a status code, for indicating a status code carried by the current frame; a relay ID, for indicating state information of the relay communication device corresponding to the relay ID; an available time duration, for indicating a continuous working time for which the relay communication device corresponding to the relay ID can still serve as a relay; an available link ID, for indicating states of one or more links available for relay transmission of the relay communication device corresponding to the relay ID; a peer STA ID of the available link ID, for indicating that the available link ID corresponds to a link between MLDs; an unavailable link ID, for indicating states of one or more links unavailable for relay transmission of the relay communication device corresponding to the relay ID; a peer STA ID of the unavailable link ID, for indicating links between MLDs that the unavailable link ID corresponds to; a Switch MLD ID, for indicating an MLD used by the relay communication device to perform a link switch/recovery; and a Switch link ID, for indicating a link used by the relay communication device to perform the link switch/recovery.

In some embodiments of the present application, the relay status information is transmitted by the relay communication device, and the relay status information indicates that a link failure occurs in a transmission on a first link between the relay communication device and a second node. The method further comprises: in response to the relay status information, performing one of: performing a relay transmission to the second node through another relay communication device; or performing a transmission through a direct link with the second node.

In some embodiments of the present application, the relay communication method further comprises: determining whether a failure occurs in a transmission on a first link with the relay communication device; and when it is determined that the failure occurs, performing one of: performing a relay transmission to a second node through another relay communication device; performing a transmission through a direct link with the second node; or performing a relay transmission through a second link with the relay communication device. In some embodiments of the present application, the relay communication method further comprises: transmitting relay status information, comprising one of: transmitting the relay status information to the second node; broadcasting the relay status information; or multicasting the relay status information.

In some embodiments of the present application, the status code comprises one or more of the following codes: a code for indicating success; a code for indicating an unspecified failure; a code for indicating that a buffer of the relay communication device for a relay function is full and a relay service cannot be continued; a code for indicating that a number of devices currently served by the relay communication device has reached an upper limit and a relay service cannot be provided to a new device; a code for indicating that a number of links currently used by the relay communication device for the relay function has reached an upper limit and no more links are available to provide the relay service; a code for indicating that the relay communication device has insufficient power and cannot continue the relay service; and a code for indicating reserved.

Hereinafter, some embodiments of the present application, in which the format of the relay status notification information is an action frame format that includes a status code, will be described in detail.

In some embodiments of the present application, the relay status notification frame format can be designed as follows:

**Table 2: Relay Status Notification frame Action field format**

| Order | Information | Notes |
|---|---|---|
| 1 | Category | Indicates the category of the current frame |
| 2 | Public Action | Indicates that the current frame is a Relay Status Notification frame |
| 3 | Status Code | Indicates the status code carried by the current frame, see Table 3 below |
| 4 | Relay ID | Consistent with the Relay ID field in FIG. 2E, and will not be described again |
| 5 | Available Time Duration | Consistent with the Available Time Duration field in FIG. 2E, and will not be described again |
| 6 | Available Link ID | Consistent with the Available Link ID field in FIG. 2E, and will not be described again |
| 7 | Peer STA ID of Available Link ID | Consistent with the Peer STA ID of Available Link ID field in FIG. 2E, and will not be described again |
| 8 | Unavailable Link ID | Consistent with the Unavailable Link ID field in FIG. 2E, and will not be described again |
| 9 | Peer STA ID of Unavailable Link ID | Consistent with the Peer STA ID of Unavailable Link ID field in FIG. 2E, and will not be described again |
| 10 | Switch MLD ID | Consistent with the Switch MLD ID field in FIG. 2E, and will not be described again |
| 11 | Switch Link ID | Consistent with the Switch Link ID field in FIG. 2E, and will not be described again |

The Status Code in Order 3 above is detailed in Table 3 below:

**Table 3: Status codes**

| Status code | Name | Meaning |
|---|---|---|
| 0 | SUCCESS | Successful |
| 1 | REFUSED_REASON_UNSPECIFIED | Unspecified failure |
| ... | ... | ... |
| A1 | FAILURE_RELAY_BUFFER_FULL | Indicates that the buffer of the Relay for the relay function is full, and the relay service cannot be continued. |
| A2 | FAILURE_RELAY_MAX_STAS | Indicates that the number of devices currently served by the Relay has reached the upper limit, and a relay service cannot be provided to new devices. |
| A3 | FAILURE_MAX_LINKS | Indicates that the number of links currently used by the Relay for the relay function has reached the upper limit, and no more links are available to provide the relay service. |
| A4 | FAILURE_POWER_DOWN | Indicates that the Relay has insufficient power and cannot continue the relay service. |
| A5 - 65536 | | Reserved |

In some embodiments of the present application, the following effects can be achieved through the above operations:
1) When a relay link failure occurs, a previous node of the relay communication device or the relay communication device transmits a Relay Status Notification frame to inform other nodes of the relay link failure, and promptly stops the relay operation, initiates a relay switch, initiates a relay link switch, or performs other such operations.
2)When the relay communication device has insufficient power, its buffer is full, the number of supported devices reaches the maximum value, or some of the links fail, the relay communication device actively transmits a Relay Status Notification frame to inform other nodes to promptly suspend the relay operation, perform a relay switch, switch to another link recommended in the Relay Status Notification frame, or re-attempt the relay operation later, etc.

In some embodiments of the present application, the relay communication method further includes: when a link between the relay communication device and the AP or the non-AP STA is disrupted, the relay communication device performs a relay switch or a relay link switch. In some embodiments of the present application, the relay communication method further includes: when the relay communication device determines that a first link between the relay communication device and one of the AP and the non-AP STA is disrupted, the relay communication device transmits a relay status notification to notify other devices participating in the relay transmission that the first link is unavailable. In some embodiments of the present application, other devices participating in the relay transmission are, for example, other AP MLDs or non-AP MLDs. Optionally, other devices participating in the relay transmission are, for example, other AP MLDs (e.g., AP MLD a) or non-AP MLDs (e.g., Relay MLD b) in FIG. 3A, FIG. 3B, and FIG. 3C. Specifically, a relay link between AP MLD 1 and Relay MLD 1 fails, and the relay status information transmitted by AP MLD 1 may be transmitted to other AP MLDs (e.g., AP MLD a), non-AP MLDs, or Relay MLD b. In some embodiments of the present application, the relay communication method further includes: the relay communication device transmits a request to one of the AP and the non-AP STA on a second link between the relay communication device and one of the AP and the non-AP STA, and the relay communication device receives a response transmitted by one of the AP and the non-AP STA on the second link; the relay communication device responds to the response transmitted by one of the AP and the non-AP STA on the second link; the relay communication device transmits data to one of the AP and the non-AP STA on the second link, and the relay communication device receives an acknowledgement transmitted by one of the AP and the non-AP STA on the second link; and the relay communication device transmits an acknowledgement to the other of the AP and the non-AP STA on the second link.

In some embodiments of the present application, receiving the relay status information includes: when a link failure occurs in a relay transmission between the relay communication device and a second node, the first node receives the relay status information transmitted by the relay communication device; and in response to the relay status information, the first node performs a relay switch or a relay link switch. In some embodiments of the present application, receiving the relay status information includes: when a link failure occurs in a relay transmission between the relay communication device and the second node, the first node receives the relay status information transmitted by the second node; and in response to the relay status information, the first node cooperates with the second node to perform a relay switch or a relay link switch.

In some embodiments of the present application, the relay communication method further includes: when the AP determines that a first link between the relay communication device and one of the AP and the non-AP STA is disrupted, the AP transmits a relay status notification to a node on the first link to notify that the first link is unavailable, and performs a relay switch or a relay link switch. In some embodiments of the present application, the relay communication method further includes: the AP transmits a request to one of the relay communication device and the non-AP STA on a second link between the relay communication device and one of the AP and the non-AP STA, and the AP receives a response transmitted by one of the relay communication device and the non-AP STA on the second link; the AP responds to the response transmitted by one of the relay communication device and the non-AP STA on the second link; the AP transmits data to one of the relay communication device and the non-AP STA on the second link, and the AP receives an acknowledgement transmitted by one of the relay communication device and the non-AP STA on the second link; and in response to the acknowledgement transmitted by one of the relay communication device and the non-AP STA on the second link, the AP performs a relay switch or a relay link switch.

In some embodiments of the present application, the relay communication method further includes: when the non-AP STA determines that a first link between the relay communication device and one of the AP and the non-AP STA is disrupted, the non-AP STA transmits a relay status notification to a node on the first link to notify that the first link is unavailable, and performs a relay switch or a relay link switch. In some embodiments of the present application, the relay communication method further includes: the non-AP STA transmits a request to one of the relay communication device and the AP on a second link between the relay communication device and one of the AP and the non-AP STA, and the non-AP STA receives a response transmitted by one of the relay communication device and the AP on the second link; the non-AP STA responds to the response transmitted by one of the relay communication device and the AP on the second link; the non-AP STA transmits data to one of the relay communication device and the AP on the second link, and the non-AP STA receives an acknowledgement transmitted by one of the relay communication device and the AP on the second link; and in response to the acknowledgement transmitted by one of the relay communication device and the AP on the second link, the non-AP STA performs a relay switch or a relay link switch.

Hereinafter, some embodiments of the present application regarding a low-latency relay mechanism will be described in detail.

In some embodiments of the present application, the key to the low-latency Relay mechanism is that after a relay link failure is discovered, the relay communication device (Relay) and/or a previous node of the relay communication device and/or a next node of the relay communication device is promptly notified, and a relay switch/relay link switch is performed. Depending on scenarios like whether it is a link disruption between the AP and the relay communication device or a link disruption between the relay communication device and the STA, the specific link recovery methods are also different, and are designed as follows.

In some embodiments of the present application, the relay communication method further includes: determining whether a failure has occurred in a transmission on a first link with the relay communication device; and when it is determined that the failure has occurred, performing one of: performing a relay transmission to a second node through another relay communication device; performing a transmission through a direct link with the second node; or performing a relay transmission through a second link with the relay communication device. In some embodiments of the present application, the relay communication method further includes: transmitting relay status information, including: transmitting the relay status information to the second node; broadcasting the relay status information; or multicasting the relay status information. As shown in FIG. 3A, FIG. 3B, and FIG. 3C, the second node is, for example, an AP.

### Embodiment: Link disruption between AP and Relay, AP initiates Relay (or Link) switch

As shown in FIG. 3A, FIG. 3B, and FIG. 3C, the previous node of Relay MLD 1 (i.e., AP MLD 1) transmits a frame (e.g., a Data frame) to Relay MLD 1 on Link 1. If no reply (e.g., an Ack frame / BlockAck frame) is received from Relay MLD 1 within a duration of Timer1, then AP MLD 1 considers Link 1 between it and Relay MLD 1 to be disrupted, and cannot continue to use Link 1 between AP MLD 1 and Relay MLD 1 to provide a relay service to non-AP MLD 1. For details, refer to the design of some of the above embodiments.

At this time, AP MLD 1 may transmit a Relay Status Notification frame on Link 1, which can achieve the following functions:
1) After other AP MLDs (e.g., AP MLD a) operating on Link 1 receive the Relay Status Notification frame, they can learn that Link 1 of Relay MLD 1 cannot provide a relay service, and the other AP MLDs should avoid using Link 1 of Relay MLD 1 to provide relay services to non-AP MLDs.
2) After a non-AP MLD operating on Link 1 receives the Relay Status Notification frame, the non-AP MLD can learn that Link 1 of Relay MLD 1 cannot provide a relay service, and the non-AP MLD should avoid using Link 1 of Relay MLD 1 to perform a relay service. In addition, AP MLD 1 may also, via the Relay Status Notification frame, indicate the Recovery MLD ID and the corresponding Recovery Link ID that it will attempt to use for link recovery. If the Recovery MLD ID field indicates the ID of the non-AP MLD, then the non-AP MLD indicated by the Recovery MLD ID field can switch to the link indicated by the Recovery Link ID field to prepare to receive a Request frame transmitted by AP MLD 1.
3) After a Relay MLD operating on Link 1 receives the Relay Status Notification frame, if the frame contains a Recovery MLD ID field and a Recovery Link ID field, and the Recovery MLD ID field indicates the MLD ID of the relay, then the relay corresponding to the Recovery MLD ID field can learn which link AP MLD 1 will attempt to use with this Relay MLD to perform link recovery. This Relay MLD can switch to the link indicated by the Recovery Link ID field to prepare to receive a Request frame transmitted by AP MLD 1.

In some embodiments of the present application, AP MLD 1 may not transmit a Relay Status Notification frame on Link 1.

Then, this embodiment designs the following three methods initiated by AP MLD 1 to recover data transmission between AP MLD 1 and non-AP MLD 1:
Option 1: As shown in FIG. 3A, AP MLD 1 attempts to use another Relay MLD to provide a relay service to non-AP MLD 1.

Step 1-1: AP MLD 1 transmits a Request frame to Relay MLD b on Link 1. If a Response frame from Relay MLD b is received after a SIFS time, then AP MLD 1 considers Relay MLD b to be normal on Link 1.

In some embodiments of the present application, AP MLD 1 may select Relay MLD b to use Link 1 to provide a relay service to non-AP MLD 1 based on results (e.g., Received Signal Strength Indicator (RSSI), Channel State Information (CSI), etc.) obtained from the Request frame and Response frame exchange.

Step 1-2: AP MLD 1 transmits a Data frame to Relay MLD b on Link 1. After a SIFS time, Relay MLD b replies to AP MLD 1 with an Ack/BlockAck frame on Link 1.

Step 1-3: Relay MLD b transmits a relayed Data frame to non-AP MLD 1 on Link 1. After a SIFS time, non-AP MLD 1 replies to Relay MLD b with an Ack/BlockAck frame on Link 1.

Step 1-4: After receiving the Ack/BlockAck frame replied by non-AP MLD 1 on Link 1, Relay MLD b transmits a relayed Ack/BlockAck frame to AP MLD 1 on Link 1, thereby completing the process of AP MLD 1 using another Relay MLD (i.e., Relay MLD b) to provide a relay service to non-AP MLD 1.

Option 2: As shown in FIG. 3B, AP MLD 1 attempts to recover the direct link with non-AP MLD 1.

Step 2-1: AP MLD 1 directly transmits a Request frame to non-AP MLD 1 on Link 1. If a Response frame from non-AP MLD 1 is received after a SIFS time, then AP MLD 1 considers non-AP MLD 1 to be normal on Link 1.

In some embodiments of the present application, an AP MLD 1 may decide to use Link 1 for direct data transmission to a non-AP MLD 1 based on a result (e.g., Received Signal Strength Indicator (RSSI), Channel State Information (CSI), etc.) obtained from a Request frame and Response frame.

Step 2-2: The AP MLD 1 transmits a Data frame to the non-AP MLD 1 on Link 1. After a SIFS time, the non-AP MLD 1 replies to the AP MLD 1 with an Ack/BlockAck frame on Link 1, thereby recovering the direct link between the AP MLD 1 and the non-AP MLD 1.

Option 3: As shown in FIG. 3C, the AP MLD 1 attempts to provide a relay service to the non-AP MLD 1 through another link of the current Relay MLD.

Step 3-1: The AP MLD 1 transmits a Request frame to a Relay MLD 1 on Link 2. If a Response frame from the Relay MLD 1 is received after a SIFS time, the AP MLD 1 considers the Relay MLD 1 to be normal on Link 2.

In some embodiments of the present application, the AP MLD 1 may select Link 2 of the Relay MLD 1 to provide a relay service to the non-AP MLD 1 based on a result (e.g., RSSI, CSI, etc.) obtained from the Request frame and Response frame exchange.

Step 3-2: The AP MLD 1 transmits a Data frame to the Relay MLD 1 on Link 2. After a SIFS time, the Relay MLD 1 replies to the AP MLD 1 with an Ack/BlockAck frame on Link 2.

Step 3-3: The Relay MLD 1 transmits a relayed Data frame to the non-AP MLD 1 on Link 2. After a SIFS time, the non-AP MLD 1 replies to the Relay MLD 1 with an Ack/BlockAck frame on Link 2.

Step 3-4: After receiving the Ack/BlockAck frame replied by the non-AP MLD 1 on Link 2, the Relay MLD 1 transmits a relayed Ack/BlockAck frame to the AP MLD 1 on Link 2, thereby completing the relay service provided by the AP MLD 1 to the non-AP MLD 1 through another link of the current Relay MLD.

It should be noted that the foregoing Request frame and Response frame are only generic terms. In actual communication, the Request frame and Response frame can be one of the following combinations:
Combination 1: The Request frame is a Request to Send (RTS) frame, and the Response frame is a Clear to Send (CTS) frame.

An RTS frame and a CTS frame are transmitted and received in a one-to-one manner. Receiving a CTS frame after transmitting an RTS frame indicates that the current link is normal, and an attempt can be made to use the current link for data transmission and reception. In addition, a device that receives the CTS frame can decide whether to use the current link for data transmission and reception based on the RSSI of the CTS frame. The RTS and CTS frame also serve to reserve the right to use the channel and prevent other unrelated devices from occupying the current channel, which can ensure that the current link can be used for subsequent data transmission.

Combination 2: The Request frame is a Multi-User RTS (MU-RTS) frame, and the Response frame is a CTS frame.

An MU-RTS frame is multicast/broadcast to multiple destination nodes, and each destination node that receives the MU-RTS frame replies with a CTS frame. Receiving a CTS frame after transmitting an MU-RTS frame indicates that the current link is normal, and an attempt can be made to use the current link for data transmission and reception. In addition, a device that receives the CTS frame can decide whether to use the current link for data transmission and reception based on the RSSI of the CTS frame. The MU-RTS and CTS frame also serve to reserve the right to use the channel and prevent other unrelated devices from occupying the current channel, which can ensure that the current link can be used for subsequent data transmission.

Combination 3: The Request frame is a Broadcast Full-Bandwidth Report Poll (BFRP) Trigger frame, and the Response frame is a Null Data Packet (NDP) frame.

A BFRP Trigger frame is multicast/broadcast to multiple destination nodes. Each destination node that receives the BFRP Trigger frame replies with an NDP frame on a corresponding resource with specified parameters according to instructions in the BFRP Trigger frame. Receiving an NDP frame after transmitting a BFRP Trigger frame indicates that the current link is normal, and an attempt can be made to use the current link for data transmission and reception. In addition, a device that receives the NDP frame can decide whether to use the current link for data transmission and reception based on the CSI obtained by the NDP frame measurement.

Combination 4: The Request frame is another subtype of Trigger frame, and the Response frame is a corresponding response frame.

For example, the Request frame is a (e.g., a Basic Trigger frame), and the Response frame is a Data frame; the Request frame is a Buffer Status Report Poll (BSRP) Trigger frame, and the Response frame is a frame carrying a Buffer Status Report; the Request frame is an NDP Feedback Report Poll (NFRP) Trigger frame, and the Response frame is an NDP feedback report, etc. The formats and functions of these frames are completely consistent with those in the IEEE 802.11 standard and are not further exemplified or described in detail in some embodiments of the present application.

The technical effect that can be achieved by this embodiment is that: after a previous node of the Relay discovers a relay link failure, it can quickly perform a relay switch or a relay link switch, or attempt to recover the direct link between the previous node and the next node of the relay, thereby reducing the delay of data transmission between the previous node and the next node of the relay.

In some embodiments of the present application, the examples of Request frame and Response frame combinations are applicable to subsequent embodiments and will not be described in detail again.

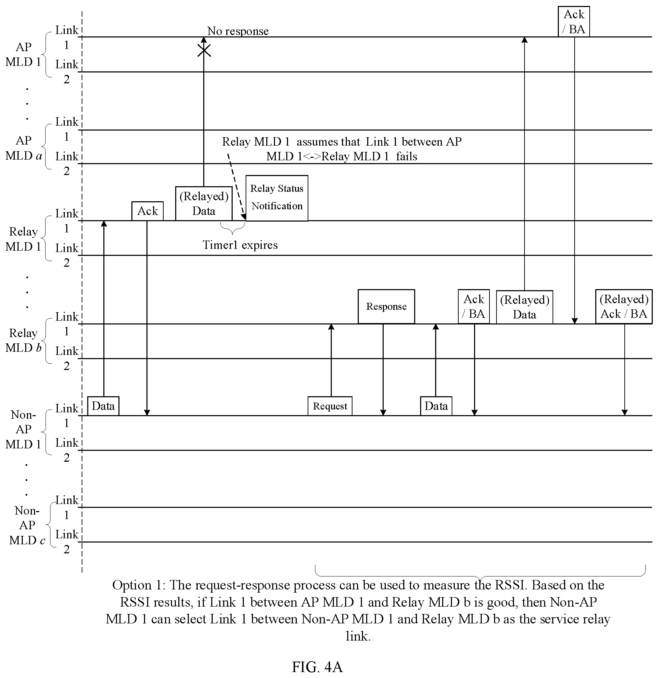

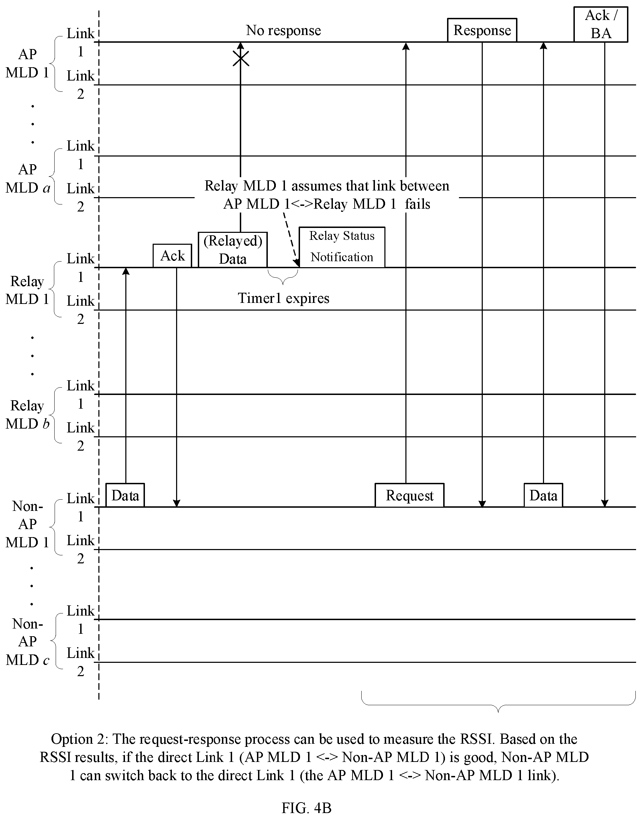

In some embodiments of the present application, the relay status information is transmitted by the relay communication device, and the relay status information indicates that a link failure occurs in a transmission on a first link between the relay communication device and a second node; the method further comprises: in response to the relay status information, performing: relaying transmission to the second node through another relay communication device; or performing transmission through a direct link with the second node. As shown in FIG. 4A and FIG. 4B, the second node is, for example, an AP.

### Embodiment: Link between AP and Relay is disrupted, and STA initiates Relay switch

As shown in FIG. 4A and FIG. 4B, a Relay MLD 1 transmits a frame (e.g., a Data frame) to a next node (i.e., an AP MLD 1) on Link 1. If no reply (e.g., an Ack frame / BlockAck frame) is received from the AP MLD 1 within a time period of Timer1, the Relay MLD 1 considers Link 1 between it and the AP MLD 1 to be disrupted and unable to continue using Link 1 between the AP MLD 1 and the Relay MLD 1 to provide a relay service to a non-AP MLD 1. For details, refer to the designs of some of the foregoing embodiments.

After discovering the link failure, the Relay MLD 1 transmits a Relay Status Notification frame on Link 1. After a non-AP MLD operating on Link 1 receives the Relay Status Notification frame, it can learn that Link 1 between the Relay MLD 1 and the AP MLD 1 cannot provide a relay service, and the non-AP MLD should avoid using Link 1 between the Relay MLD 1 and the AP MLD 1 to perform a relay service.

This embodiment then provides the following two methods initiated by the non-AP MLD 1 to recover data transmission between the non-AP MLD 1 and the AP MLD 1:

Option 1: As shown in FIG. 4A, the non-AP MLD 1 attempts to use another Relay MLD for relaying.

Step 1: The non-AP MLD 1 transmits a Request frame to a Relay MLD b on Link 1. If a Response frame from the Relay MLD b is received after a SIFS time, the non-AP MLD 1 considers that itself and the Relay MLD b are normal on Link 1.

In some embodiments of the present application, the non-AP MLD 1 may select the Relay MLD b to use Link 1 to provide a relay service to the non-AP MLD 1 based on a result (e.g., RSSI, CSI, etc.) obtained from the Request frame and Response frame.

Step 2: The non-AP MLD 1 transmits a Data frame to the Relay MLD b on Link 1. After a SIFS time, the Relay MLD b replies to the non-AP MLD 1 with an Ack/BlockAck frame on Link 1.

Step 3: The Relay MLD b transmits a relayed Data frame to the AP MLD 1 on Link 1. After a SIFS time, the AP MLD 1 replies to the Relay MLD b with an Ack/BlockAck frame on Link 1.

Step 4: After receiving the Ack/BlockAck frame replied by the AP MLD 1 on Link 1, the Relay MLD b transmits a relayed Ack/BlockAck frame to the non-AP MLD 1 on Link 1, thereby completing the relaying by the non-AP MLD 1 using another Relay MLD (i.e., Relay MLD b).

Option 2: As shown in FIG. 4B, the non-AP MLD 1 attempts to recover the direct link with the AP MLD 1.

Step 1: The non-AP MLD 1 directly transmits a Request frame to the AP MLD 1 on Link 1. If a Response frame from the AP MLD 1 is received after a SIFS time, the non-AP MLD 1 considers that itself and the AP MLD 1 are normal on Link 1.

In some embodiments of the present application, the non-AP MLD 1 may decide to use Link 1 for direct data transmission to the AP MLD 1 based on a result (e.g., RSSI, CSI, etc.) obtained from the Request frame and Response frame exchange.

Step 2: The non-AP MLD 1 transmits a Data frame to the AP MLD 1 on Link 1. After a SIFS time, the AP MLD 1 replies to the non-AP MLD 1 with an Ack/BlockAck frame on Link 1, thereby recovering the direct link between the non-AP MLD 1 and the AP MLD 1.

The technical effect that can be achieved by this embodiment is that: after the Relay discovers a relay link failure with a next node, it can quickly notify the previous node (or the next node) to perform a relay switch, or attempt to recover the direct link between the previous node and the next node of the relay, thereby reducing the delay of data transmission between the previous node and the next node of the relay.

### Embodiment: Link between the AP and Relay is disrupted, and Relay initiates Link switch

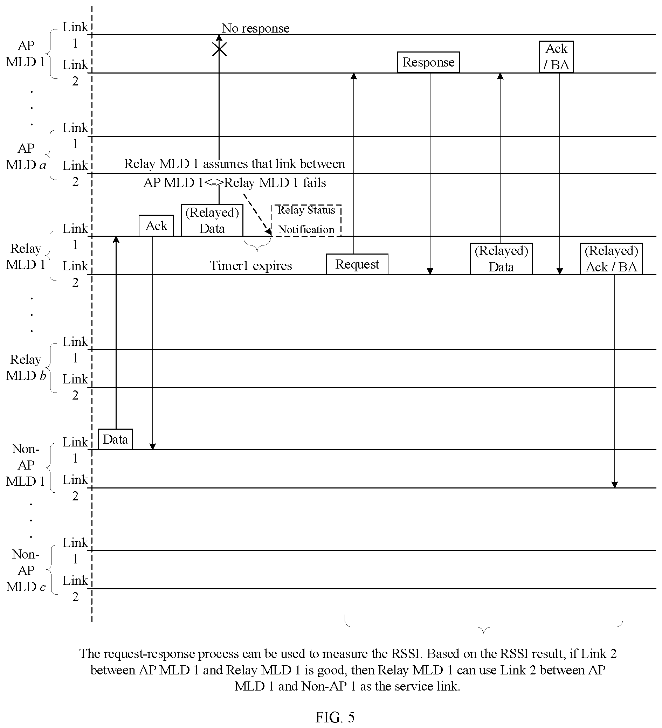

As shown in FIG. 5, this scenario is consistent with some embodiments of FIG. 4A and FIG. 4B, but the method for recovering relay communication is different. The difference is that after a Relay MLD 1 determines that Link 1 between it and an AP MLD 1 is disrupted, it can transmit a Relay Status Notification frame, which can achieve the following functions:

After other AP MLDs operating on Link 1 receive the Relay Status Notification frame, they can learn that Link 1 of Relay MLD 1 cannot provide a relay service, and the other AP MLDs should avoid using Link 1 of Relay MLD 1 to provide a relay service to non-AP MLDs. In addition, Relay MLD 1 may also use the Relay Status Notification frame to announce the Recovery MLD ID and the corresponding Recovery Link ID for the link recovery attempt. If the Recovery MLD ID field indicates the ID of an AP MLD, the AP MLD indicated by the Recovery MLD ID field can switch to the link indicated by the Recovery Link ID field to prepare to receive (e.g., a Request frame transmitted by Relay MLD 1).

The specific operations for Relay MLD 1 to recover the relay link are as follows:
Step 1: Relay MLD 1 transmits a Request frame to AP MLD 1 on Link 2. If a Response frame from AP MLD 1 is received after a SIFS time, Relay MLD 1 considers itself and AP MLD 1 are normal on Link 2.

In some embodiments of the present application, Relay MLD 1 may select to use Link 2 of AP MLD 1 to provide a relay service to a non-AP MLD 1 based on a result (e.g., RSSI, CSI, etc.) obtained from the Request frame and Response frame.

Step 2: Relay MLD 1 transmits a Data frame to AP MLD 1 on Link 2. After a SIFS time, AP MLD 1 replies to Relay MLD 1 with an Ack/BlockAck frame on Link 2.

Step 3: Relay MLD 1 transmits a relayed Ack/BlockAck frame to the non-AP MLD 1 on Link 2, thereby completing the process of Relay MLD 1 providing a relay service to the non-AP MLD 1 by switching to another link (i.e., Link 2).

The effect that can be achieved by this embodiment is that after a Relay discovers a relay link failure with a next node, it can quickly perform a relay link switch, thereby reducing the delay of data transmission between the previous node of the relay and the next node of the relay.

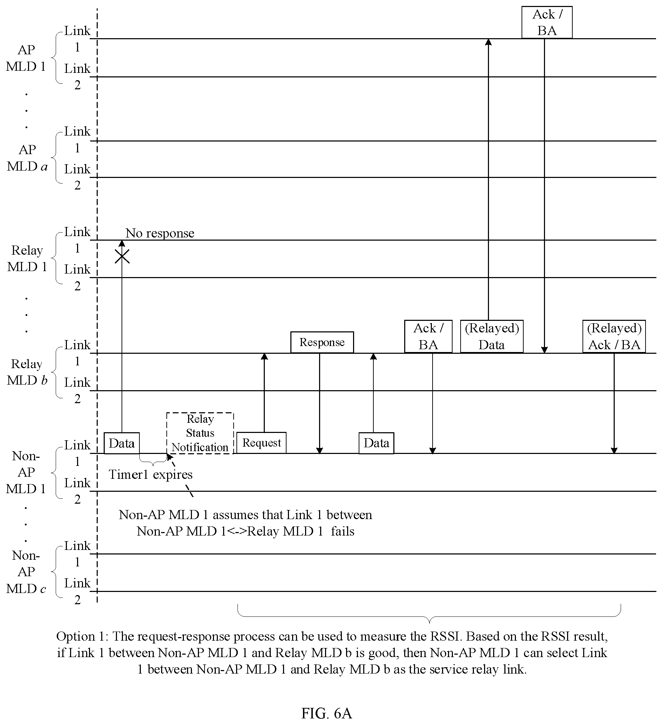

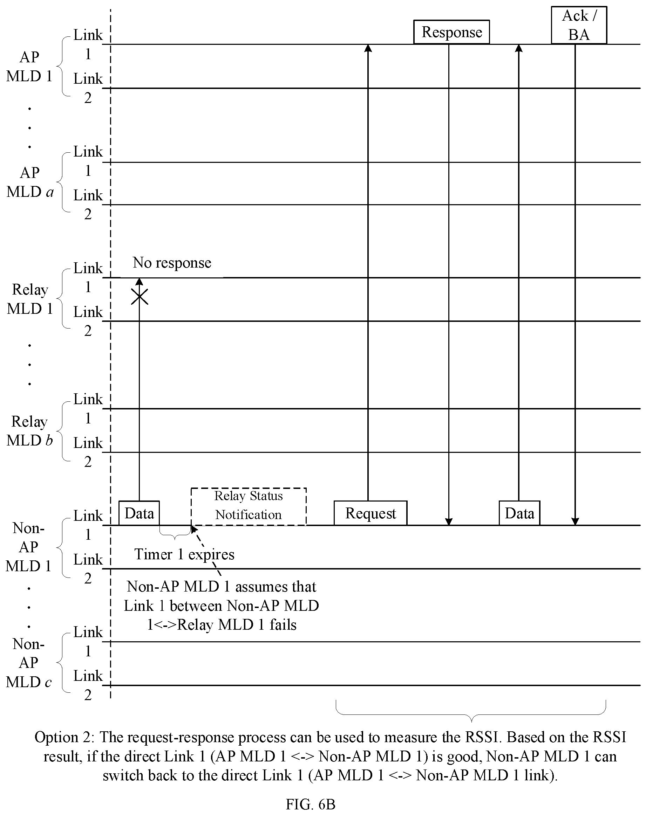

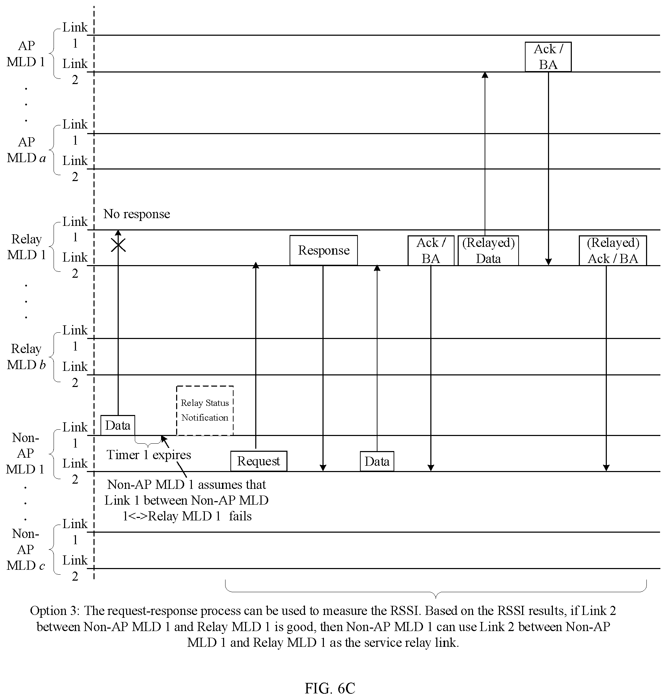

In some embodiments of the present application, the relay communication method further comprises: determining whether a failure occurs in a transmission on a first link with the relay communication device; and when it is determined that the failure occurs, performing a relay transmission to the second node through another relay communication device; or performing a transmission through a direct link with the second node; or performing a relay transmission through a second link with the relay communication device. In some embodiments of the present application, the relay communication method further comprises: transmitting relay status information, comprising: transmitting the relay status information to the second node; or broadcasting the relay status information; or multicasting the relay status information. As shown in FIG. 6A, FIG. 6B, and FIG. 6C, the second node is, for example, a Relay.

### Embodiment: Link between a Relay and a STA is disrupted, and the STA initiates a Relay or Link switch

As shown in FIG. 6A, FIG. 6B, and FIG. 6C, a previous node of Relay MLD 1 (i.e., non-AP MLD 1) transmits a frame (e.g., a Data frame) to Relay MLD 1 on Link 1. If no reply (e.g., an Ack frame / BlockAck frame) is received from Relay MLD 1 within a period of Timer1, non-AP MLD 1 determines that Link 1 between it and Relay MLD 1 is disrupted and can no longer be used for relaying. For details, refer to the designs of some of the foregoing embodiments.

At this time, non-AP MLD 1 may transmit a Relay Status Notification frame on Link 1. In such a case:
1) If other AP MLDs (e.g., AP MLD a) operating on Link 1 receive the Relay Status Notification frame, they learn that the link between non-AP MLD 1 and Relay MLD 1 on Link 1 cannot provide a relay service, and these other AP MLDs should avoid using this link for relaying.
2) After a non-AP MLD operating on Link 1 receives the Relay Status Notification frame, the non-AP MLD learn that Link 1 of Relay MLD 1 cannot provide a relay service, and the non-AP MLD should avoid using Link 1 of Relay MLD 1 to perform a relay service. In addition, non-AP MLD 1 may also use the Relay Status Notification frame to announce the Recovery MLD ID and the corresponding Recovery Link ID for the link recovery attempt. If the Recovery MLD ID field indicates the ID of an AP MLD, the AP MLD indicated by the Recovery MLD ID field can switch to the link indicated by the Recovery Link ID field to prepare to receive (e.g., a Request frame transmitted by non-AP MLD 1).
3) After a Relay MLD operating on Link 1 receives the Relay Status Notification frame, if the frame includes a Recovery MLD ID field and a Recovery Link ID field, and the Recovery MLD ID field indicates the MLD ID of that relay, then the relay can be informed which link non-AP MLD 1 will attempt to use for link recovery with that Relay MLD. The Relay MLD can then switch to the link indicated by the Recovery Link ID field to prepare to receive a Request frame transmitted by non-AP MLD 1.

In some embodiments of the present application, non-AP MLD 1 may directly initiate a Relay (or Link) switch operation without transmitting a Relay Status Notification frame on Link 1.

This embodiment then provides the following three methods initiated by non-AP MLD 1 to recover data transmission between AP MLD 1 and non-AP MLD 1:
Option 1: As shown in FIG. 6A, non-AP MLD 1 attempts to use another Relay MLD for relaying.

Step 1: non-AP MLD 1 transmits a Request frame to a Relay MLD b on Link 1. If a Response frame from Relay MLD b is received after a SIFS time, non-AP MLD 1 considers itself and Relay MLD b on Link 1 to be normal.

In some embodiments of the present application, non-AP MLD 1 may select Relay MLD b to use Link 1 to provide a relay service to non-AP MLD 1 based on a result (e.g., RSSI, CSI, etc.) obtained from the Request frame and Response frame exchange.

Step 2: non-AP MLD 1 transmits a Data frame to Relay MLD b on Link 1. After a SIFS time, Relay MLD b replies to non-AP MLD 1 with an Ack/BlockAck frame on Link 1.

Step 3: Relay MLD b transmits a relayed Data frame to AP MLD 1 on Link 1. After a SIFS time, AP MLD 1 replies to Relay MLD b with an Ack/BlockAck frame on Link 1.

Step 4: After receiving the Ack/BlockAck frame replied by AP MLD 1 on Link 1, Relay MLD b transmits a relayed Ack/BlockAck frame to non-AP MLD 1 on Link 1, thereby completing the process of non-AP MLD 1 using another Relay MLD (i.e., Relay MLD b) for relaying.

Option 2: As shown in FIG. 6B, non-AP MLD 1 attempts to recover the direct link with AP MLD 1.

Step 1: non-AP MLD 1 directly transmits a Request frame to AP MLD 1 on Link 1. If a Response frame from AP MLD 1 is received after a SIFS time, non-AP MLD 1 considers itself and AP MLD 1 on Link 1 to be normal.

In some embodiments of the present application, non-AP MLD 1 may decide to use Link 1 for direct data transmission to AP MLD 1 based on a result (e.g., RSSI, CSI, etc.) obtained from the Request frame and Response frame exchange.

Step 2: non-AP MLD 1 transmits a Data frame to AP MLD 1 on Link 1. After a SIFS time, AP MLD 1 replies to non-AP MLD 1 with an Ack/BlockAck frame on Link 1, thereby completing the recovery of the direct link between non-AP MLD 1 and AP MLD 1.

Option 3: As shown in FIG. 6C, non-AP MLD 1 attempts to relay through another link of the current Relay MLD.

Step 1: non-AP MLD 1 transmits a Request frame to Relay MLD 1 on Link 2. If a Response frame from Relay MLD 1 is received after a SIFS time, non-AP MLD 1 considers itself and Relay MLD 1 on Link 2 to be normal.

In some embodiments of the present application, non-AP MLD 1 may select to use Link 2 of Relay MLD 1 to provide a relay service to non-AP MLD 1 based on a result (e.g., RSSI, CSI, etc.) obtained from the Request frame and Response frame exchange.

Step 2: non-AP MLD 1 transmits a Data frame to Relay MLD 1 on Link 2. After a SIFS time, Relay MLD 1 replies to non-AP MLD 1 with an Ack/BlockAck frame on Link 2.

Step 3: Relay MLD 1 transmits a relayed Data frame to AP MLD 1 on Link 2. After a SIFS time, AP MLD 1 replies to Relay MLD 1 with an Ack/BlockAck frame on Link 2.

Step 4: After receiving the Ack/BlockAck frame replied by AP MLD 1 on Link 2, Relay MLD 1 transmits a relayed Ack/BlockAck frame to non-AP MLD 1 on Link 2, thereby completing the process of non-AP MLD 1 relaying through another link of the current Relay MLD 1.

The effect that can be achieved by this embodiment is that after a previous node of a Relay discovers a relay link failure, it can quickly perform a relay switch, or a relay link switch, or attempt to recover the direct link between the previous node of the relay and the next node of the relay, thereby reducing the delay of data transmission between the previous node of the relay and the next node of the relay.

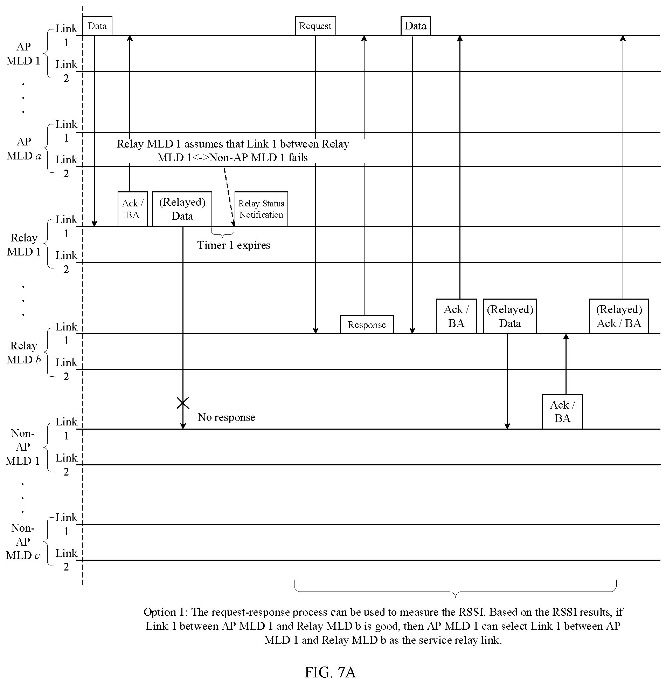

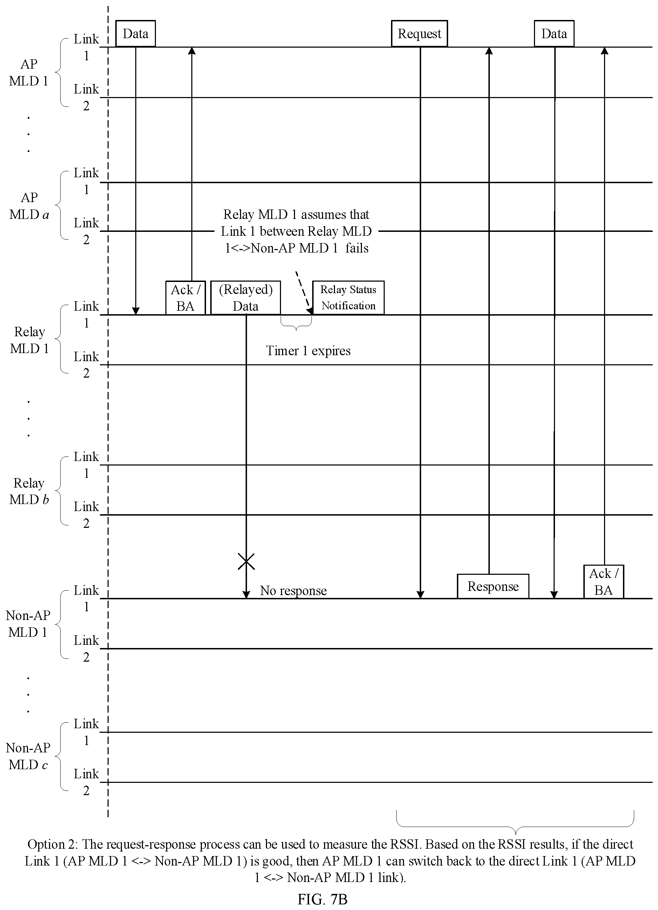

In some embodiments of the present application, the relay status information is transmitted by the relay communication device, and the relay status information indicates that a link failure occurs in a transmission on a first link between the relay communication device and a second node; the method further comprises: in response to the relay status information, performing a relay transmission to the second node through another relay communication device; or performing a transmission through a direct link with the second node. As shown in FIG. 7A and FIG. 7B, the second node is, for example, a STA.

### Embodiment: Link between a Relay and a STA is disrupted, and an AP initiates a Relay switch

As shown in FIG. 7A and FIG. 7B, a Relay MLD 1 transmits a frame (for example, a Data frame) to a next node (that is, a non-AP MLD 1) on Link 1. If no reply (for example, an Ack frame or a BlockAck frame) is received from the non-AP MLD 1 before a timer, Timer1, expires, the Relay MLD 1 determines that Link 1 between itself and the non-AP MLD 1 is disrupted and can no longer be used for relaying. For details, reference is made to the design in Section 5.2.1.

In such case, the Relay MLD 1 transmits a Relay Status Notification frame on Link 1. Then, if an AP MLD operating on Link 1, such as AP MLD 1 or other AP MLD, receives the Relay Status Notification frame, it can learn that the link between Relay MLD 1 and non-AP MLD 1 cannot provide a relay service. The AP MLD should avoid using the link between Relay MLD 1 and non-AP MLD 1 to perform a relay service.

This embodiment then describes the following two methods initiated by AP MLD 1 to resume data transmission between AP MLD 1 and non-AP MLD 1:

Option 1: As shown in FIG. 7A, AP MLD 1 attempts to use another Relay MLD for relaying.

Step 1: The AP MLD 1 transmits a Request frame to a Relay MLD b on Link 1. If a Response frame from the Relay MLD b is received after a SIFS time, the AP MLD 1 determines that itself and the Relay MLD b are normal on Link 1.

In some embodiments of the present application, the AP MLD 1 may select the Relay MLD b to use Link 1 for providing a relay service to the AP MLD 1 based on a result (for example, a RSSI or CSI) obtained from the Request frame and Response frame.

Step 2: The AP MLD 1 transmits a Data frame to the Relay MLD b on Link 1. After a SIFS time, the Relay MLD b replies to the AP MLD 1 with an Ack/BlockAck frame on Link 1.

Step 3: The Relay MLD b transmits a relayed Data frame to the non-AP MLD 1 on Link 1. After a SIFS time, the non-AP MLD 1 replies to the Relay MLD b with an Ack/BlockAck frame on Link 1.

Step 4: After receiving the Ack/BlockAck frame from the non-AP MLD 1 on Link 1, the Relay MLD b transmits a relayed Ack/BlockAck frame to the AP MLD 1 on Link 1, thereby completing the relay process using another Relay MLD (i.e., Relay MLD b).

Option 2: As shown in FIG. 7B, AP MLD 1 attempts to restore the direct link with non-AP MLD 1.

Step 1: The AP MLD 1 directly transmits a Request frame to the non-AP MLD 1 on Link 1. If a Response frame from the non-AP MLD 1 is received after a SIFS time, the AP MLD 1 determines that itself and the non-AP MLD 1 are normal on Link 1.

In some embodiments of the present application, the AP MLD 1 may decide to use Link 1 for direct data transmission to the non-AP MLD 1 based on a result (for example, RSSI or CSI) obtained from the Request frame and Response frame.

Step 2: The AP MLD 1 transmits a Data frame to the non-AP MLD 1 on Link 1. After a SIFS time, the non-AP MLD 1 replies to the AP MLD 1 with an Ack/BlockAck frame on Link 1, thereby completing the restoration of the direct link between AP MLD 1 and non-AP MLD 1.

The effect achieved by this embodiment is that: after a relay discovers a relay link failure with a next node, the previous node (or the next node) can be quickly notified to perform a relay switch, or an attempt can be made to restore the direct link between the relay's previous node and the relay's next node, thereby reducing the data transmission delay between the relay's previous node and next node.

### Embodiment: Link between a Relay and a STA is disrupted, and the Relay initiates a Link switch

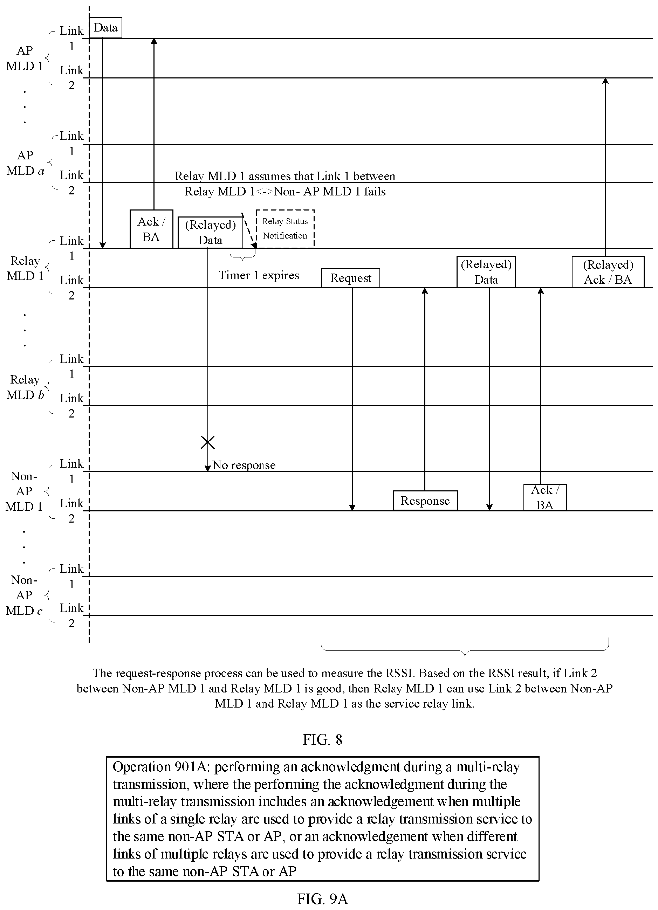

As shown in FIG. 8, this scenario is consistent with some embodiments of FIG. 7A and FIG. 7B, but the method for recovering relay communication is different. The difference is that: after the Relay MLD 1 determines that Link 1 between itself and the non-AP MLD 1 is disrupted, it can transmit a Relay Status Notification frame, which can achieve the following functions:

Other AP MLDs operating on Link 1, after receiving the Relay Status Notification frame, can learn that Link 1 of the Relay MLD 1 cannot provide a relay service, and the other AP MLDs should avoid using Link 1 of the Relay MLD 1 to provide a relay service to non-AP MLDs. In addition, the Relay MLD 1 may also use the Relay Status Notification frame to indicate a Recovery MLD ID and a corresponding Recovery Link ID for a link recovery attempt. If the Recovery MLD ID field indicates the ID of a non-AP MLD, the non-AP MLD indicated by the Recovery MLD ID field can switch to the link indicated by the Recovery Link ID field to prepare to receive a Request frame transmitted by the Relay MLD 1.

The specific operations for the Relay MLD 1 to recover the relay link are as follows:
Step 1: The Relay MLD 1 transmits a Request frame to the non-AP MLD 1 on Link 2. If a Response frame from the non-AP MLD 1 is received after a SIFS time, the Relay MLD 1 determines that itself and the non-AP MLD 1 are normal on Link 2.

In some embodiments of the present application, the Relay MLD 1 may select to use Link 2 of the non-AP MLD 1 to provide a relay service to the AP MLD 1 based on a result (for example, RSSI or CSI) obtained from the Request frame and Response frame.

Step 2: The Relay MLD 1 transmits a Data frame to the non-AP MLD 1 on Link 2. After a SIFS time, the non-AP MLD 1 replies to the Relay MLD 1 with an Ack/BlockAck frame on Link 2.

Step 3: The Relay MLD 1 transmits a relayed Ack/BlockAck frame to the AP MLD 1 on Link 2, thereby completing the provision of a relay service to the AP MLD 1 by the Relay MLD 1 through switching to another link (i.e., Link 2).

The effect achieved by this embodiment is that: after a relay discovers a relay link failure with a next node, a relay link switch can be quickly performed, reducing the data transmission delay between the relay's previous node and next node.

FIG. 9A is a schematic flowchart of a relay communication method provided by an embodiment of the present application. As shown in FIG. 9A, the relay communication method includes at least one of the following operations: Operation 901A: performing an acknowledgment during a multi-relay transmission, where the performing the acknowledgment during the multi-relay transmission includes an acknowledgement when multiple links of a single relay are used to provide a relay transmission service to the same non-AP STA or AP, or an acknowledgement when different links of multiple relays are used to provide a relay transmission service to the same non-AP STA or AP.

According to the foregoing technical solution, the performing the acknowledgment during the multi-relay transmission includes an acknowledgement when multiple links of a single relay are used to provide a relay transmission service to the same non-AP STA or AP, or an acknowledgement when different links of multiple relays are used to provide a relay transmission service to the same non-AP STA or AP. In this way, relaying can extend the signal coverage/transmission distance of Wi-Fi, improve the data rate for cell-edge users, reduce delay, and enhance user experience.

In some embodiments of the present application, the acknowledgement for using multiple links of a single relay to provide a relay transmission service to the same non-AP STA or AP includes: a relay communication device uses the multiple different links to transmit the same data to the same non-AP MLD or AP to provide a relay service, where after the same non-AP MLD or AP successfully receives the data and provides an acknowledgement on any one of the multiple different links, data reception and/or acknowledgement operation for the same data is no longer required on the remaining links of the multiple different links.

In some embodiments of the present application, the acknowledgement for using different links of multiple relays to provide a relay transmission service to the same non-AP STA or AP includes: multiple relays use the different links to transmit different data to the same non-AP MLD or AP to provide a relay service, where after the same non-AP MLD or AP successfully receives data and provides an acknowledgement on any one of the different links of the multiple relays, data reception and/or acknowledgement operation for the same data is no longer required on the remaining links of the different links of the multiple relays.

In some embodiments of the present application, the acknowledgement for using different links of multiple relays to provide a relay transmission service to the same non-AP STA or AP includes: multiple relays use the different links to transmit the same data to the same non-AP MLD or AP to provide a relay service, where after the same non-AP MLD or AP successfully receives data and provides an acknowledgement on any one of the different links of the multiple relays, the data reception and/or acknowledgement operation for the same data is no longer required on the remaining links of the different links of the multiple relays.

Some embodiments of the present application regarding acknowledgment during multi-relay transmission will be described in detail below.

### Embodiment: A single Relay MLD uses multiple links to transmit data to a non-AP MLD

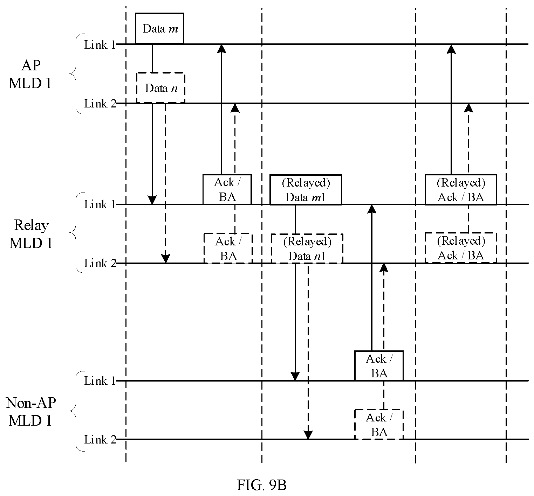

As shown in FIG. 9B, the AP MLD 1 transmits Data m to the Relay MLD 1 on Link 1, and the AP MLD 1 transmits Data n to the Relay MLD 1 on Link 2. To enhance the reliability of relay transmission, the content of Data m and Data n can be the same. Then, if the Relay MLD 1 receives the Data (m or n) transmitted by the AP MLD 1 on either Link 1 or Link 2, it replies with an Ack/BlockAck frame after a SIFS time for acknowledgement. This can be specifically divided into the following three operations:
Option 1: If the Relay MLD 1 receives Data m transmitted by the AP MLD 1 on Link 1, it replies with an Ack/BlockAck frame on Link 1 after a SIFS time for acknowledgement. In this case, the Relay MLD 1 does not need to reply with an Ack/BlockAck frame on Link 2 for acknowledgement; that is, the Relay MLD 1 has successfully received Data m transmitted by the AP MLD 1.
Option 2: If the Relay MLD 1 receives Data n transmitted by the AP MLD 1 on Link 2, it replies with an Ack/BlockAck frame on Link 2 after a SIFS time for acknowledgement. In this case, the Relay MLD 1 does not need to reply with an Ack/BlockAck frame on Link 1 for acknowledgement; that is, the Relay MLD 1 has successfully received Data n transmitted by the AP MLD 1.
Option 3: If the Relay MLD 1 receives Data m transmitted by the AP MLD 1 on Link 1 and receives Data n transmitted by the AP MLD 1 on Link 2, then after a Short Inter-Frame Space (SIFS) interval, the Relay MLD 1 responds with an Ack/BlockAck frame on Link 1 and responds with an Ack/BlockAck frame on Link 2. This indicates that the Relay MLD 1 has successfully received Data m (or Data n, where the content of Data m and Data n is identical) transmitted by the AP MLD 1.

Then, the Relay MLD 1 transmits relayed Data m1 to the non-AP MLD 1 on Link 1, and the Relay MLD 1 transmits relayed Data n1 to the non-AP MLD 1 on Link 2. Data m1 is part or all of Data m, and Data n1 is part or all of Data n. In addition, to enhance the reliability of the relay transmission, the content of Data m1 and Data n1 can be identical. Then, if the non-AP MLD 1 receives the relayed Data (m1 or n1) transmitted by the Relay MLD 1 on either Link 1 or Link 2, it responds with an Ack/BlockAck frame after a SIFS interval. This can be specifically divided into the following three options:
Option 1: If the non-AP MLD 1 receives the relayed Data m1 transmitted by the Relay MLD 1 on Link 1, then after a SIFS interval, the non-AP MLD 1 responds with an Ack/BlockAck frame on Link 1. In this case, the non-AP MLD 1 does not need to respond with an Ack/BlockAck frame on Link 2. This indicates that the non-AP MLD 1 has successfully received the relayed Data m1 transmitted by the Relay MLD 1.
Option 2: If the non-AP MLD 1 receives the relayed Data n1 transmitted by the Relay MLD 1 on Link 2, then after a SIFS interval, the non-AP MLD 1 responds with an Ack/BlockAck frame on Link 2. In this case, the non-AP MLD 1 does not need to respond with an Ack/BlockAck frame on Link 1. This indicates that the non-AP MLD 1 has successfully received the relayed Data n1 transmitted by the Relay MLD 1.
Option 3: If the non-AP MLD 1 receives the relayed Data m1 transmitted by the Relay MLD 1 on Link 1 and receives the relayed Data n1 transmitted by the Relay MLD 1 on Link 2, then after a SIFS interval, the non-AP MLD 1 responds with an Ack/BlockAck frame on Link 1 and responds with an Ack/BlockAck frame on Link 2. This indicates that the non-AP MLD 1 has successfully received the relayed Data m1 (or Data n1, where the content of Data m1 and Data n1 is identical) transmitted by the Relay MLD 1.

Finally, the Relay MLD 1 transmits a relayed Ack/BlockAck frame to the AP MLD 1 on Link 1 and/or Link 2, indicating that the Relay MLD 1 has successfully forwarded Data m1 (or Data n1) to the non-AP MLD 1.

In some embodiments of the present application, FIG. 9B is described using an example in which frames transmitted on Link 1 and Link 2 are fully aligned, which is applicable when the transmitting and receiving multi-link devices have Simultaneous Transmit/Receive (STR) capability or Non-Simultaneous Transmit/Receive (NSTR) capability. If the transmitting and receiving multi-link devices have STR capability, the frames transmitted on Link 1 and Link 2 may not be aligned.

The technical effect of this embodiment is that a single relay uses multiple links to provide a relay service to a non-AP MLD. Different data can be transmitted on different links to increase throughput. Alternatively, if the same data is transmitted on different links, the reception of data on any link by the receiving device is considered a successful reception, and the remaining links can either continue to receive or stop receiving, which enhances the stability of the relay transmission.

### Embodiment: Multiple Relay MLDs use different links to transmit data to a non-AP MLD

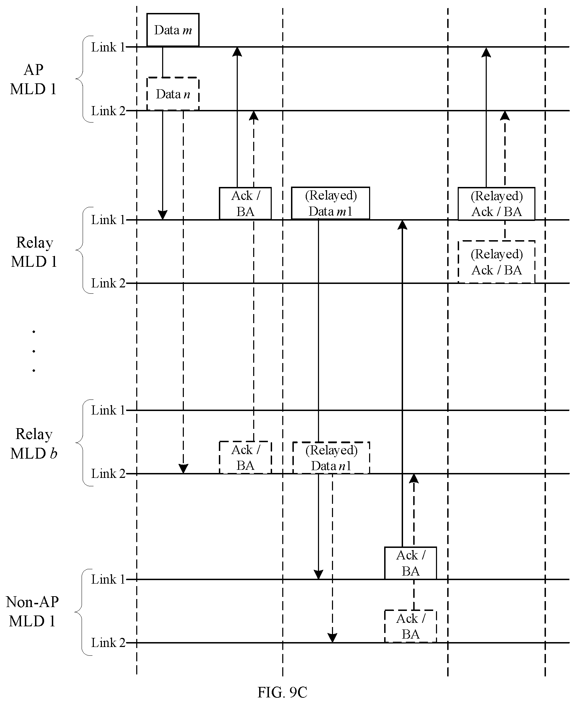

As shown in FIG. 9C, the AP MLD 1 transmits Data m to the Relay MLD 1 on Link 1, and the AP MLD 1 transmits Data n to the Relay MLD 2 on Link 2. To enhance the reliability of the relay transmission, the content of Data m and Data n can be identical. Then, if the Relay MLD 1 on Link 1 and/or the Relay MLD 2 on Link 2 receives the Data (m or n) transmitted by the AP MLD 1, it responds with an Ack/BlockAck frame after a SIFS interval. This can be specifically divided into the following three options:
Option 1: If the Relay MLD 1 receives Data m transmitted by the AP MLD 1 on Link 1, then after a SIFS interval, the Relay MLD 1 responds with an Ack/BlockAck frame on Link 1. In this case, the Relay MLD 2 does not need to respond with an Ack/BlockAck frame on Link 2. This indicates that the Relay MLD 1 has successfully received Data m transmitted by the AP MLD 1.
Option 2: If the Relay MLD 2 receives Data n transmitted by the AP MLD 1 on Link 2, then after a SIFS interval, the Relay MLD 2 responds with an Ack/BlockAck frame on Link 2. In this case, the Relay MLD 1 does not need to respond with an Ack/BlockAck frame on Link 1. This indicates that the Relay MLD 2 has successfully received Data n transmitted by the AP MLD 1.
Option 3: If the Relay MLD 1 receives Data m transmitted by the AP MLD 1 on Link 1 and the Relay MLD 2 receives Data n transmitted by the AP MLD 1 on Link 2, then after a SIFS interval, the Relay MLD 1 responds with an Ack/BlockAck frame on Link 1, and the Relay MLD 2 also responds with an Ack/BlockAck frame on Link 2. This indicates that the Relay MLD 1 has successfully received Data m transmitted by the AP MLD 1, and the Relay MLD 2 has successfully received Data n transmitted by the AP MLD 1 (the content of Data m and Data n is identical).

Then, the Relay MLD 1 transmits relayed Data m1 to the non-AP MLD 1 on Link 1, and the Relay MLD 2 transmits relayed Data n1 to the non-AP MLD 1 on Link 2.Data m1 is part or all of Data m, and Data n1 is part or all of Data n. In addition, to enhance the reliability of the relay transmission, the content of Data m1 and Data n1 can be identical. Then, if the non-AP MLD 1 receives the relayed Data (m1 or n1) transmitted by the Relay MLD 1 and the Relay MLD 2 on either Link 1 or Link 2, it responds with an Ack/BlockAck frame after a SIFS interval. This can be specifically divided into the following three options:
Option 1: If the non-AP MLD 1 receives the relayed Data m1 transmitted by the Relay MLD 1 on Link 1, then after a SIFS interval, the non-AP MLD 1 responds with an Ack/BlockAck frame on Link 1. In this case, the non-AP MLD 1 does not need to respond with an Ack/BlockAck frame on Link 2. This indicates that the non-AP MLD 1 has successfully received the relayed Data m1 transmitted by the Relay MLD 1.
Option 2: If the non-AP MLD 1 receives the relayed Data n1 transmitted by the Relay MLD 2 on Link 2, then after a SIFS interval, the non-AP MLD 1 responds with an Ack/BlockAck frame on Link 2. In this case, the non-AP MLD 1 does not need to respond with an Ack/BlockAck frame on Link 1. This indicates that the non-AP MLD 1 has successfully received the relayed Data n1 transmitted by the Relay MLD 2.
Option 3: If the non-AP MLD 1 receives the relayed Data m1 transmitted by the Relay MLD 1 on Link 1 and receives the relayed Data n1 transmitted by the Relay MLD 2 on Link 2, then after a SIFS interval, the non-AP MLD 1 responds with an Ack/BlockAck frame on Link 1, and the non-AP MLD 1 also responds with an Ack/BlockAck frame on Link 2. This indicates that the non-AP MLD 1 has successfully received the relayed Data m1 (or Data n1, where the content of Data m1 and Data n1 is identical) transmitted by the Relay MLD 1 and/or the Relay MLD 2.

Finally, the Relay MLD 1 transmits a relayed Ack/BlockAck frame to the AP MLD 1 on Link 1, indicating that the Relay MLD 1 has successfully forwarded Data m1 to the non-AP MLD 1. Alternatively, the Relay MLD 2 transmits a relayed Ack/BlockAck frame to the AP MLD 1 on Link 2, indicating that the Relay MLD 2 has successfully forwarded Data n1 to the non-AP MLD 1.

In some embodiments of the present application, FIG. 9C is described using an example in which frames transmitted on Link 1 and Link 2 are fully aligned, which is applicable when the transmitting and receiving multi-link devices have STR capability or NSTR capability. If the transmitting and receiving multi-link devices have STR capability, the frames transmitted on Link 1 and Link 2 may not be aligned.

The technical effect of this embodiment is that multiple relays use different links to provide a relay service to a non-AP MLD. Different data can be transmitted on different links to increase throughput. Alternatively, if the same data is transmitted on different links, the reception of data on any link by the receiving device is considered a successful reception, and the remaining links can either continue to receive or stop receiving, which enhances the stability of the relay transmission.

In summary, in some embodiments of the present application, to achieve high-reliability and low-latency relay operation for Wi-Fi 8, the following inventive aspects are disclosed: design of the capability parameter for a relay; a relay link failure handling mechanism, including a method for discovering a relay link failure and a method for notifying of a relay link failure; a relay switch mechanism, including: Scenario 1: a method for an AP to initiate a relay (or link) switch when a link between the AP and a relay is disrupted; Scenario 2: a method for a STA to initiate a relay switch when a link between an AP and a relay is disrupted; Scenario 3: a method for a relay to initiate a link switch when a link between an AP and the relay is disrupted; Scenario 4: a method for an STA to initiate a relay (or link) switch when a link between a relay and the STA is disrupted; Scenario 5: a method for an AP to initiate a relay switch when a link between a relay and an STA is disrupted; Scenario 6: a method for a relay to initiate a link switch when a link between the relay and an STA is disrupted; and an acknowledgment mechanism for multi-relay transmission, including an acknowledgment method for when multiple links of a single relay are used to provide a relay transmission service to the same STA, and an acknowledgment method for when different links of multiple relays are used to provide a relay transmission service to the same STA. Some embodiments of the present application disclose multiple mechanisms that can enhance the reliability and reduce the latency of relay transmission. The disclosed relay link failure discovery and notification mechanism enables faster relay failure identification, and a mechanism for fast relay switch is disclosed based on the identified failure. This significantly helps in reducing the latency of relay transmission and mitigating the latency caused by the inability to perform data transmission between an AP and an STA due to a relay failure. In addition, the present application discloses an acknowledgment mechanism for when multiple relays provide services to the same device. Even if an individual relay cannot complete the relay transmission, other relays can still serve the target device, which enhances the reliability of relay transmission. During the standardization process of IEEE 802.11bn, research and discussion on relay failure handling and reliability enhancement are inevitable. Therefore, the subject matter disclosed in some embodiments of the present application may become an indispensable technical aspect of the 802.11bn standard.

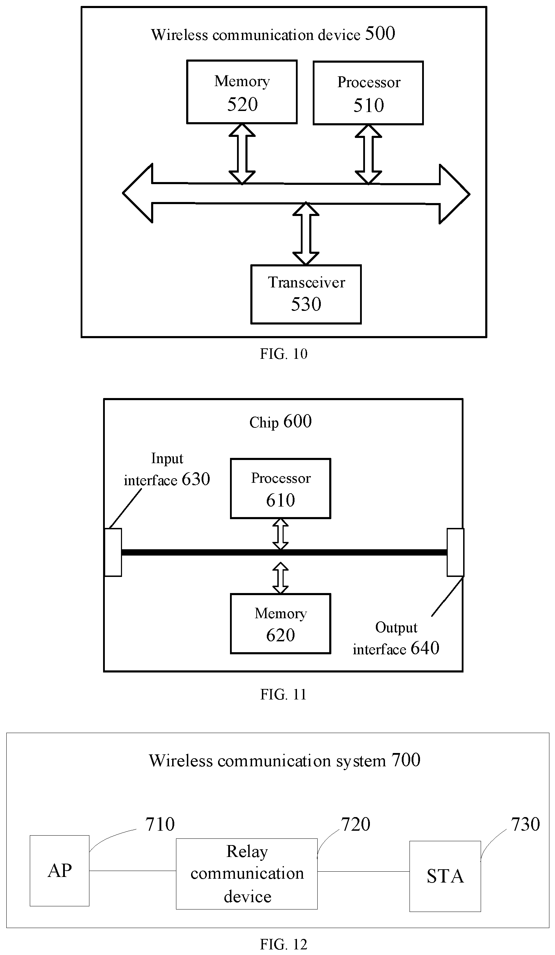

FIG. 10 is a schematic structural diagram of a wireless communication device 500 provided by an embodiment of the present application. The wireless communication device may be a relay communication device, an AP, or a STA. The wireless communication device 500 shown in FIG. 10 includes a processor 510. The processor 510 can invoke and execute a computer program from a memory to implement the methods in the embodiments of the present application. In some embodiments of the present application, an AP includes an AP STA or an AP Multi-Link Device (MLD), and an STA includes an AP STA, a non-AP STA, an AP MLD, or a non-AP MLD.

Optionally, as shown in FIG. 10, the wireless communication device 500 may also include a memory 520. The processor 510 can invoke and execute a computer program from the memory 520 to implement the methods in the embodiments of the present application. The memory 520 may be a separate device independent of the processor 510, or may be integrated into the processor 510.

Optionally, as shown in FIG. 10, the wireless communication device 500 may also include a transceiver 530. The processor 510 can control the transceiver 530 to communicate with other devices. Specifically, the transceiver 530 can transmit information or data to other devices, or receive information or data transmitted by other devices. The transceiver 530 may include a transmitter and a receiver. The transceiver 530 may further include one or more antennas.

Optionally, the wireless communication device 500 may be specifically implemented as the relay communication device in the embodiments of the present application, and the wireless communication device 500 can implement the corresponding processes performed by the relay communication device in the various methods of the embodiments of the present application. Further details are omitted here for brevity.

Optionally, the wireless communication device 500 may be specifically implemented as the AP in the embodiments of the present application, and the wireless communication device 500 can implement the corresponding processes performed by the AP in the various methods of the embodiments of the present application. Further details are omitted here for brevity.

Optionally, the wireless communication device 500 may be specifically implemented as the STA in the embodiments of the present application, and the wireless communication device 500 can implement the corresponding processes performed by the STA in the various methods of the embodiments of the present application. Further details are omitted here for brevity. In some embodiments of the present application, an STA includes an AP STA, a non-AP STA, an AP MLD, or a non-AP MLD.

FIG. 11 is a schematic structural diagram of a chip according to an embodiment of the present application. The chip 600 shown in FIG. 11 includes a processor 610. The processor 610 can invoke and execute a computer program from a memory to implement the methods in the embodiments of the present application.

Optionally, as shown in FIG. 11, the chip 600 may also include a memory 620. The processor 610 can invoke and execute a computer program from the memory 620 to implement the methods in the embodiments of the present application. The memory 620 may be a separate device independent of the processor 610, or may be integrated into the processor 610.

Optionally, the chip 600 may also include an input interface 630. The processor 610 can control the input interface 630 to communicate with other devices or chips. Specifically, the input interface 630 can acquire information or data transmitted by other devices or chips.

Optionally, the chip 600 may also include an output interface 640. The processor 610 can control the output interface 640 to communicate with other devices or chips. Specifically, the output interface 640 can output information or data to other devices or chips.

Optionally, the chip may be applied to the relay communication device in the embodiments of the present application, and the chip can implement the corresponding processes performed by the relay communication device in the various methods of the embodiments of the present application. Further details are omitted here for brevity.

Optionally, the chip may be applied to the AP in the embodiments of the present application, and the chip can implement the corresponding processes performed by the AP in the various methods of the embodiments of the present application. Further details are omitted here for brevity.

Optionally, the chip may be applied to the STA in the embodiments of the present application, and the chip can implement the corresponding processes performed by the STA in the various methods of the embodiments of the present application. Further details are omitted here for brevity.

FIG. 12 is a schematic block diagram of a wireless communication system 700 provided by an embodiment of the present application. As shown in FIG. 12, the communication system 700 includes an AP 710, a relay communication device 720, and an STA 730. The AP 710 may be configured to implement the corresponding functions performed by the AP in the foregoing methods, the relay communication device 720 may be configured to implement the corresponding functions performed by the relay communication device in the foregoing methods, and the STA 730 may be configured to implement the corresponding functions performed by the STA in the foregoing methods. Further details are omitted here for brevity.

It should be understood that the processor in the embodiments of the present application may be an integrated circuit chip with signal processing capabilities. In implementation, the steps of the foregoing method embodiments may be implemented by integrated logic circuits of hardware in the processor, or by instructions in the form of software.

It can be understood that the memory in the embodiments of the present application may be a volatile memory or a non-volatile memory, or may include both volatile and non-volatile memories. It should be noted that the memory of the systems and methods described herein is intended to include, but is not limited to, these and any other suitable types of memory. Embodiments of the present application also provide a computer-readable storage medium for storing a computer program.

Optionally, the computer-readable storage medium may be applied to the relay communication device in the embodiments of the present application, and the computer program causes a computer to perform the corresponding processes performed by the relay communication device in the various methods of the embodiments of the present application. Further details are omitted here for brevity. Optionally, the computer-readable storage medium may be applied to the AP in the embodiments of the present application, and the computer program causes a computer to perform the corresponding processes performed by the AP in the various methods of the embodiments of the present application. Further details are omitted here for brevity. Optionally, the computer-readable storage medium may be applied to the STA in the embodiments of the present application, and the computer program causes a computer to perform the corresponding processes performed by the STA in the various methods of the embodiments of the present application. Further details are omitted here for brevity.

Embodiments of the present application also provide a computer program product, including computer program instructions.

Optionally, the computer program product may be applied to the relay communication device in the embodiments of the present application, and the computer program instructions cause a computer to perform the corresponding processes performed by the relay communication device in the various methods of the embodiments of the present application. Further details are omitted here for brevity. Optionally, the computer program product may be applied to the AP in the embodiments of the present application, and the computer program instructions cause a computer to perform the corresponding processes performed by the AP in the various methods of the embodiments of the present application. Further details are omitted here for brevity. Optionally, the computer program product may be applied to the STA in the embodiments of the present application, and the computer program instructions cause a computer to perform the corresponding processes performed by the STA in the various methods of the embodiments of the present application. Further details are omitted here for brevity.

Embodiments of the present application also provide a computer program.

Optionally, the computer program may be applied to the relay communication device in the embodiments of the present application, and when the computer program is run on a computer, causes the computer to perform the corresponding processes performed by the relay communication device in the various methods of the embodiments of the present application. Further details are omitted here for brevity. Optionally, the computer program may be applied to the AP in the embodiments of the present application, and when the computer program is run on a computer, causes the computer to perform the corresponding processes performed by the AP in the various methods of the embodiments of the present application. Further details are omitted here for brevity. Optionally, the computer program may be applied to the STA in the embodiments of the present application, and when the computer program is run on a computer, causes the computer to perform the corresponding processes performed by the STA in the various methods of the embodiments of the present application. Further details are omitted here for brevity.

A person of ordinary skill in the art will appreciate that the units and algorithm steps of the examples described in connection with the embodiments disclosed herein can be implemented as electronic hardware, or a combination of computer software and electronic hardware. Whether these functions are performed by hardware or software depends on the particular applications and design constraints of the technical solutions. A person skilled in the art may use different methods to implement the described functions for each particular application, but such implementations should not be considered as departing from the scope of the present application.

The foregoing descriptions are merely specific embodiments of the present application, but the protection scope of the present application is not limited thereto. Any variation or replacement readily conceivable to a person skilled in the art within the technical scope disclosed in the present application should be encompassed in the protection scope of the present application. Therefore, the protection scope of the present application shall be determined by the scope of the appended claims.

## Claims

1. A relay communication method, performed at a relay communication device, the relay communication method comprising:
transmitting, to an access point (AP) and/or a non-AP station (STA), a capability parameter of the relay communication device, wherein the capability parameter comprises one or more of the following:
buffer information of the relay communication device available for relaying;
information on whether a power state of the relay communication device is available for a relay service;
multi-link relay operation configuration information, for indicating whether the relay communication device supports a multi-link relay operation and/or for indicating a link that supports relay reception or transmission;
buffer information of the relay communication device acting as an AP or a non-AP STA;
information indicating a maximum number of served devices supported by the relay communication device; or
information indicating a number of served devices that the relay communication device is capable of further supporting.

2. The method according to claim 1, wherein the transmitting the capability parameter to the AP and/or the non-AP STA comprises:
transmitting a first frame to the AP and/or the non-AP STA;
wherein the first frame carries an Ultra High Reliability (UHR) relay capability element, the UHR relay capability element comprises one or more of the following fields: a buffer state field for relay operation, a power state field, a Multi-Link Device (MLD) relay profile field, a buffer state field of a relay STA, a maximum supported STA field, or an available supported STA field, wherein:
the buffer state field for relay operation is for indicating the buffer information of the relay communication device available for relaying,
the power state field is for indicating whether the power state of the relay communication device is available for the relay service,
the MLD relay profile field is for indicating the multi-link relay operation configuration information,
the buffer state field of the relay STA is for indicating the buffer information of the relay communication device acting as the AP or the non-AP STA,
the maximum supported STA field is for indicating the maximum number of served devices supported by the relay communication device, and
the available supported STA field is for indicating the number of served devices that the relay communication device is capable of further supporting.

3. The relay communication method according to claim 2, wherein the first frame is a probe request frame, a probe response frame, a multi-link (ML) probe request frame, an ML probe response frame, an association request frame, or an association response frame.

4. The relay communication method according to any one of claims 1 to 3, wherein the method further comprises:
transmitting relay status notification information to the AP and/or the non-AP STA, wherein the relay status notification information is for indicating a current state of the relay communication device.

5. The method according to claim 4, wherein the transmitting the relay status information to the AP and/or the non-AP STA comprises:
transmitting a relay status notification frame to the AP and/or the non-AP STA, wherein the relay status notification frame is for indicating a relay link failure or state information of the relay communication device.

6. The method according to claim 4 or 5, wherein the transmitting the relay status information to the AP and/or the non-AP STA comprises:
periodically or quasi-periodically transmitting the relay status information to the AP and/or the non-AP STA.

7. The method according to any one of claims 4 to 6, wherein the transmitting the relay status information to the AP and/or the non-AP STA comprises:
when a link failure occurs in a relay transmission between the relay communication device and one of the AP and the non-AP STA, transmitting the relay status information to other devices participating in the relay transmission.

8. The relay communication method according to claim 4, wherein the relay status notification information comprises one or more of the following fields:
a relay identifier (ID) field, for indicating state information of the relay communication device corresponding to the relay ID field;
a buffer state field for relay operation, for indicating the buffer information of the relay communication device available for relaying;
an available supported STA field, for indicating a number of served devices that the relay communication device is capable of further supporting;
a power state field, for indicating whether the power state of the relay communication device is available for the relay service; or
an available time duration field, for indicating a continuous working time for which the relay communication device corresponding to the relay ID field is still capable of serving as a relay.

9. The relay communication method according to claim 8, wherein the relay status notification information further comprises the following fields:
an available link ID 1~m field, for indicating states of one or more links available for relay transmission of the relay communication device corresponding to the relay ID field, wherein m is a positive integer; and
a peer STA ID field corresponding to the available link ID 1~m, for indicating that the available link ID 1~m field corresponds to a link between MLDs.

10. The relay communication method according to claim 8 or 9, wherein the relay status notification information further comprises the following fields:
an unavailable link ID 1~n field, for indicating states of one or more links unavailable for relay transmission of the relay communication device corresponding to the relay ID field, wherein n is a positive integer; and
a peer STA ID field corresponding to the unavailable link ID 1~n, for indicating that the unavailable link ID 1~n field corresponds to a link between MLDs.

11. The relay communication method according to any one of claims 8 to 10, wherein the relay status notification information further comprises the following fields:
a switch MLD ID field, for indicating an MLD used by the relay communication device to perform a link switch/recovery; and
a switch link ID field, for indicating a link used by the relay communication device to perform the link switch/recovery.

12. The relay communication method according to any one of claims 5 to 11, wherein a format of the relay status notification information is in an action frame format comprising a status code, and an action field format of the relay status notification information comprises one or more orders and information corresponding to the one or more orders, the information comprising one or more of the following information:
a category, for indicating a category of a current frame;
a public action, for indicating that the current frame is the relay status notification frame;
a status code, for indicating a status code carried by the current frame;
a relay ID, for indicating the state information of the relay communication device corresponding to the relay ID;
an available time duration, for indicating the continuous working time for which the relay communication device corresponding to the relay ID is still capable of serving as a relay;
an available link ID, for indicating the states of one or more links available for relay transmission of the relay communication device corresponding to the relay ID;
a peer STA ID corresponding to the available link ID, for indicating that the available link ID corresponds to a link between MLDs;
an unavailable link ID, for indicating the states of one or more links unavailable for relay transmission of the relay communication device corresponding to the relay ID;
a peer STA ID corresponding to the unavailable link ID, for indicating that the unavailable link ID corresponds to a link between MLDs;
a switch MLD ID, for indicating the MLD used by the relay communication device to perform the link switch/recovery; or
a switch link ID, for indicating the link used by the relay communication device to perform the link switch/recovery.

13. The relay communication method according to claim 12, wherein the status code comprises one or more of the following codes:
a code for indicating success;
a code for indicating an unspecified failure;
a code for indicating that a buffer of the relay communication device for a relay function is full and a relay service cannot be continued;
a code for indicating that a number of devices currently served by the relay communication device has reached an upper limit and a relay service cannot be provided to a new device;
a code for indicating that a number of links currently used by the relay communication device for the relay function has reached an upper limit and no more links are available to provide the relay service;
a code for indicating that the relay communication device has insufficient power and cannot continue the relay service; or
a code for indicating reserved.

14. The relay communication method according to any one of claims 7 to 13, wherein the method further comprises:
when a link between the relay communication device and the AP or the non-AP STA is disrupted, performing a relay switch or a relay link switch.

15. The relay communication method according to claim 14, wherein the method further comprises:
when it is determined that a first link between the relay communication device and one of the AP and the non-AP STA is disrupted, transmitting a relay status notification to notify other devices participating in the relay transmission that the first link is unavailable.

16. The relay communication method according to claim 15, wherein the method further comprises:
transmitting a request to the one of the AP and the non-AP STA on a second link between the relay communication device and the one of the AP and the non-AP STA, and receiving a response transmitted by the one of the AP and the non-AP STA on the second link;
in response to the response transmitted by the one of the AP and the non-AP STA on the second link, transmitting data to the one of the AP and the non-AP STA on the second link, and receiving an acknowledgement transmitted by the one of the AP and the non-AP STA on the second link; and
transmitting an acknowledgement to the other of the AP and the non-AP STA on the second link.

17. A relay communication method, wherein the method comprises:
performing an acknowledgement during a multi-relay transmission, wherein the acknowledgement during the multi-relay transmission comprises an acknowledgement when multiple links of a single relay are used to provide a relay transmission service to a same non-AP station (STA) or access point (AP), or an acknowledgement when different links of multiple relays are used to provide a relay transmission service to a same non-AP STA or AP.

18. The relay communication method according to claim 17, wherein the performing the acknowledgement when the multiple links of the single relay are used to provide the relay transmission service to the same non-AP STA or AP comprises:
a relay communication device using the multiple links to transmit different data to the same non-AP MLD or AP to provide a relay service, wherein after the same non-AP MLD or AP successfully receives data and provides an acknowledgement on any one of the different links, remaining links of the multiple links are no longer required to perform data reception and/or acknowledgement operation for the same data.

19. The relay communication method according to claim 17, wherein the performing the acknowledgement when the multiple links of the single relay are used to provide the relay transmission service to the same non-AP STA or access point AP comprises:
a relay communication device using the multiple links to transmit same data to the same non-AP MLD or AP to provide a relay service, wherein after the same non-AP MLD or AP successfully receives data and provides an acknowledgement on any one of the multiple links, remaining links of the multiple links are no longer required to perform data reception and/or acknowledgement operation for the same data.

20. The relay communication method according to claim 17, wherein the performing the acknowledgement when the different links of the multiple relays are used to provide the relay transmission service to the same non-AP STA or AP comprises:
multiple relays using the different links to transmit different data to the same non-AP MLD or AP to provide a relay service, wherein after the same non-AP MLD or AP successfully receives data and provides an acknowledgement on any one of the different links of the multiple relays, remaining links of the different links of the multiple relays are no longer required to perform data reception and/or acknowledgement operation for the same data.

21. The relay communication method according to claim 17, wherein the performing the acknowledgement when the different links of the multiple relays are used to provide the relay transmission service to the same non-AP STA or AP comprises:
multiple relays using the different links to transmit same data to the same non-AP MLD or AP to provide a relay service, wherein after the same non-AP MLD or AP successfully receives data and provides an acknowledgement on any one of the different links of the multiple relays, remaining links of the different links of the multiple relays are no longer required to perform data reception and/or acknowledgement operation for the same data.

22. A relay communication method, performed at a first node, wherein the method comprises:
receiving, from a relay communication device, a capability parameter of the relay communication device, wherein the capability parameter comprises one or more of the following:
buffer information of the relay communication device available for relaying:
information on whether a power state of the relay communication device is available for a relay service:
multi-link relay operation configuration information, for indicating whether the relay communication device supports a multi-link relay operation and/or for indicating a link that supports relay reception or transmission;
buffer information of the relay communication device acting as an AP or a non-AP STA;
information indicating a maximum number of served devices supported by the relay communication device; or
information indicating a number of served devices that the relay communication device is capable of further supporting.

23. The method according to claim 22, wherein the receiving the capability parameter from the relay communication device comprises:
receiving a first frame transmitted by the relay communication device;
wherein the first frame carries an Ultra High Reliability (UHR) relay capability element, the UHR relay capability element comprises one or more of the following fields: a buffer state field for relay operation, a power state field, a Multi-Link Device (MLD) relay profile field, a buffer state field of a relay STA, a maximum supported STA field, and an available supported STA field, wherein:
the buffer state field for relay operation is for indicating the buffer information of the relay communication device available for relaying,
the power state field is for indicating whether the power state of the relay communication device is available for the relay service,
the MLD relay profile field is for indicating the multi-link relay operation configuration information,
the buffer state field of the relay STA is for indicating the buffer information of the relay communication device acting as the AP or the non-AP STA,
the maximum supported STA field is for indicating the maximum number of served devices supported by the relay communication device, and
the available supported STA field is for indicating the number of served devices that the relay communication device is capable of further supporting.

24. The relay communication method according to claim 23, wherein the first frame is a probe request frame, a probe response frame, a multi-link (ML) probe request frame, an ML probe response frame, an association request frame, or an association response frame.

25. The relay communication method according to any one of claims 22 to 24, wherein the method further comprises:
receiving relay status information, wherein the relay status information is for indicating a current state of the relay communication device.

26. The method according to claim 25, wherein the receiving the relay status information comprises:
receiving a relay status notification frame, wherein the relay status notification frame is for indicating a relay link failure or status information of the relay communication device.

27. The method according to claim 25 or 26, wherein the receiving the relay status information comprises:
periodically or quasi-periodically receiving the relay status information transmitted by the relay communication device.

28. The method according to any one of claims 25 to 27, wherein the receiving the relay status information comprises:
when a link failure occurs in a relay transmission between the relay communication device and a second node, receiving, by the first node, the relay status information transmitted by the relay communication device; and
in response to the relay status information, performing, by the first node, a relay switch or a relay link switch.

29. The method according to any one of claims 25 to 27, wherein the receiving the relay status information comprises:
when a link failure occurs in a relay transmission between the relay communication device and a second node, receiving, by the first node, the relay status information transmitted by the second node; and
in response to the relay status information, cooperating, by the first node, with the second node to perform a relay switch or a relay link switch.

30. The relay communication method according to any one of claims 26 to 29, wherein the relay status notification frame comprises one or more of the following fields:
a relay identifier (ID) field, for indicating status information of the relay communication device corresponding to the relay ID field;
a buffer state field for relay operation, for indicating buffer information of the relay communication device available for relaying;
an available supported STA field, for indicating a number of served devices that the relay communication device is capable of further supporting;
a power state field, for indicating whether a power state of the relay communication device is available for a relay service; or
an available time duration field, for indicating a continuous working time for which the relay communication device corresponding to the relay ID field is still capable of serving as a relay.

31. The relay communication method according to claim 30, wherein the relay status notification information further comprises the following fields:
an available link ID 1~m field, for indicating states of one or more links available for relay transmission of the relay communication device corresponding to the relay ID field, wherein m is a positive integer; and
a peer STA ID field corresponding to the available link ID 1~m, for indicating that the available link ID 1~m field corresponds to a link between Multi-Link Devices (MLDs).

32. The relay communication method according to claim 30 or 31, wherein the relay status notification information further comprises the following fields:
an unavailable link ID 1~n field, for indicating states of one or more links unavailable for relay transmission of the relay communication device corresponding to the relay ID field, wherein n is a positive integer; and
a peer STA ID field corresponding to the unavailable link ID 1~n, for indicating that the unavailable link ID 1~n field corresponds to a link between MLDs.

33. The relay communication method according to any one of claims 30 to 32, wherein the relay status notification information further comprises the following fields:
a switch MLD ID field, for indicating an MLD used by the relay communication device to perform a link switch/recovery; and
a switch link ID field, for indicating a link used by the relay communication device to perform the link switch/recovery.

34. The relay communication method according to any one of claims 26 to 33, wherein a format of the relay status notification information is an action frame format comprising a status code, and an action field format of the relay status notification information comprises one or more orders and information corresponding to the one or more orders, wherein the information comprises one or more of the following:
a category, for indicating a category of a current frame;
a public action, for indicating that the current frame is the relay status notification frame;
a status code, for indicating a status code carried by the current frame;
a relay ID, for indicating the status information of the relay communication device corresponding to the relay ID;
an available time duration, for indicating the continuous working time for which the relay communication device corresponding to the relay ID is still capable of serving as a relay;
an available link ID, for indicating the states of one or more links available for relay transmission of the relay communication device corresponding to the relay ID;
a peer STA ID corresponding to the available link ID, for indicating that the available link ID corresponds to a link between MLDs;
an unavailable link ID, for indicating states of one or more links unavailable for relay transmission of the relay communication device corresponding to the relay ID;
a peer STA ID corresponding to the unavailable link ID, for indicating that the unavailable link ID corresponds to a link between MLDs;
a switch MLD ID, for indicating the MLD used by the relay communication device to perform the link switch/recovery; or
a switch link ID, for indicating the link used by the relay communication device to perform the link switch/recovery.

35. The relay communication method according to claim 34, wherein the status code comprises one or more of the following codes:
a code for indicating success;
a code for indicating an unspecified failure;
a code for indicating that a buffer of the relay communication device for a relay function is full and a relay service cannot be continued;
a code for indicating that a number of devices currently served by the relay communication device has reached an upper limit and a relay service cannot be provided to a new device;
a code for indicating that a number of links currently used by the relay communication device for the relay function has reached an upper limit and no more links are available to provide the relay service;
a code for indicating that the relay communication device has insufficient power and cannot continue the relay service; or
a code for indicating reserved.

36. The relay communication method according to claim 25, wherein the relay status information is transmitted by the relay communication device, and the relay status information indicates that a link failure occurs in a transmission on a first link between the relay communication device and a second node;
the method further comprises:
in response to the relay status information,
performing a relay transmission to the second node through another relay communication device; or
performing a transmission through a direct link with the second node.

37. The relay communication method according to claim 22, wherein the method further comprises:
determining whether a failure occurs in a transmission on a first link with the relay communication device; and
when it is determined that the failure occurs,
performing a relay transmission to a second node through another relay communication device; or
performing a transmission through a direct link with the second node; or
performing a relay transmission through a second link with the relay communication device.

38. The relay communication method according to claim 37, wherein the method further comprises:
transmitting relay status information, comprising:
transmitting the relay status information to the second node; or
broadcasting the relay status information; or
multicasting the relay status information.

39. A wireless communication device, comprising: a processor and a memory, wherein the memory is configured to store a computer program, and the processor is configured to call and run the computer program stored in the memory to perform the method according to any one of claims 1 to 38.
